(19) Europäisches Patentamt
European Patent Office
Office européen des brevets

(11) EP 1 656 400 B1

(12) # FASCICULE DE BREVET EUROPEEN

(45) Date de publication et mention de la délivrance du brevet:
**29.05.2019 Bulletin 2019/22**

(21) Numéro de dépôt: **04763491.0**

(22) Date de dépôt: **26.07.2004**

(51) Int Cl.:
***C08F 210/02*** *(2006.01)* ***C08F 4/62*** *(2006.01)*

(86) Numéro de dépôt international:
**PCT/EP2004/008336**

(87) Numéro de publication internationale:
**WO 2005/028526 (31.03.2005 Gazette 2005/13)**

(54) **SYSTEME CATALYTIQUE POUR L'OBTENTION DE COPOLYMÈRES DIÈNE(S) CONJUGUÉ(S) / MONO-OLÉFINE(S) ET CES COPOLYMÈRES**

COPOLYMERE AUS KONJUGIERTEN DIENEN UND KATALYSATORSYSTEM ZU DEREN HERSTELLUNG

CATALYTIC SYSTEM FOR THE PRODUCTION OF CONJUGATED DIENE/MONO-OLEFIN COPOLYMERS AND COPOLYMERS THEREOF

(84) Etats contractants désignés:
**AT BE BG CH CY CZ DE DK EE ES FI FR GB GR HU IE IT LI LU MC NL PL PT RO SE SI SK TR**

(30) Priorité: **13.08.2003 FR 0309930**

(43) Date de publication de la demande:
**17.05.2006 Bulletin 2006/20**

(73) Titulaires:
- **Compagnie Générale des Etablissements Michelin**
  **63000 Clermont-Ferrand (FR)**
- **TOTAL RESEARCH & TECHNOLOGY FELUY**
  **7181 Seneffe (BE)**

(72) Inventeurs:
- **BOISSON, Christophe**
  **F-69100 Villeurbanne (FR)**
- **MONTEIL, Vincent**
  **F-26100 Romans sur Isère (FR)**
- **SPITZ, Roger**
  **F-69006 Lyon (FR)**

(74) Mandataire: **Le Cam, Véronique Marie Christine et al**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A- 0 891 993**
**US-B1- 6 348 555**
**US-B1- 6 569 799**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 656 400 B1

## Description

La présente invention concerne un système catalytique utilisable pour la copolymérisation d'au moins un diène conjugué et d'au moins une mono-oléfine, un procédé de préparation de ce système catalytique, un procédé de préparation d'un copolymère d'au moins un diène conjugué et d'au moins une mono-oléfine consistant à utiliser ledit système catalytique, et un tel copolymère. L'invention s'applique notamment à la copolymérisation d'un diène conjugué avec une alpha-oléfine et/ou de l'éthylène.

La copolymérisation d'un diène conjugué et d'une mono-oléfine, telle qu'une alpha-oléfine (i.e. comportant par définition au moins trois atomes de carbone, à la différence de l'éthylène qui n'est pas une alpha-oléfine), a longtemps été difficilement réalisable en raison des indices de coordination différents que présentent diènes conjugués et mono-oléfines vis-à-vis des systèmes catalytiques de type Ziegler Natta à base de métaux de transition.

On sait préparer depuis les années 1970, au moyen de tels systèmes catalytiques à base de vanadium ou de titane, des copolymères alternés d'un diène conjugué, tel que le butadiène ou l'isoprène, et d'une alpha-oléfine, telle que le propylène. On se reportera par exemple à l'article « Furukawa, J. In Alternating Copolymers, Cowie, J. M. G., Ed. ; Plenum Press: New York, 1985; pp 153-187 » qui mentionne l'utilisation d'un système catalytique à base d'un dérivé de vanadium et d'un composé aluminique pour l'obtention de ces copolymères.

Un inconvénient majeur de ces systèmes catalytiques est qu'ils doivent être préparés à très basse température (environ -70° C) et qu'ils conduisent à utiliser une température de copolymérisation également basse, étant comprise entre -30° C et -50° C. L'utilisation de températures plus élevées pour la copolymérisation conduit à une désactivation de ces systèmes catalytiques et à une diminution des masses moléculaires des copolymères obtenus.

Pour l'obtention de copolymères alternés du butadiène et du propylène de masses moléculaires plus élevées avec une activité améliorée et un contrôle accru du degré d'alternance, le document de brevet allemand DE-A-270 6118 enseigne d'utiliser un système catalytique comprenant un dialcoxyhalogénure de vanadium et un trialkylaluminium.

Un inconvénient majeur de ces systèmes catalytiques à base de vanadium est encore que la copolymérisation doit être conduite à basse température.

On a également préparé par le passé des copolymères non alternés diène conjugué/ alpha-oléfine, tels que des copolymères butadiène/propylène ou butadiène/éthylène/propylène, en réalisant les copolymérisations à des températures supérieures à la température ambiante. A cet effet, on a utilisé soit des systèmes catalytiques homogènes à base d'un trialkylaluminium halogéné et d'un dérivé de vanadium (voir les documents de brevet allemands DE-A-253 4496 et DE-A-200 1367 qui concernent l'obtention de terpolymères butadiène/éthylène/propylène à taux réduit d'unités trans-1,4 butadiène) ou d'un dérivé de titane et de phosgène (voir l'article « Furukawa, J. et al., J. Polym. Sci., Polym. Chem. Ed. 1973, 11, p. 629 » qui concerne l'obtention de copolymères statistiques), soit des systèmes catalytiques à base de $TiCl_4$ supportés par un halogénure de magnésium (voir le document de brevet européen EP-A-171 025).

On notera que ces derniers systèmes catalytiques supportés présentent le double inconvénient de conduire, d'une part, à la formation d'un gel dans les copolymères obtenus et, d'autre part, à des taux molaires de butadiène insérés réduits, étant typiquement inférieurs à 15 %.

On a également cherché à préparer des terpolymères butadiène/éthylène/propylène au moyen de systèmes catalytiques homogènes comprenant des métallocènes classiques du groupe IV de la classification périodique, répondant à la formule $Cp_2MX_2$ (voir le document de brevet international WO-A-88/04672 et l'article « Galimberti et al., Makromol. Chem. 1991, 192, p. 2591 »).

Un inconvénient majeur de ces systèmes catalytiques de formule $Cp_2MX_2$ est que le butadiène limite considérablement l'activité et ne s'insère qu'en quantité très réduite. On notera que les copolymères ainsi obtenus comportent des unités cycliques (unités cyclopentane).

Le document de brevet européen EP-A-891 993 présente un système catalytique pour la copolymérisation d'une mono-oléfine ayant 2 à 12 atomes de carbone et d'au moins un monomère diène conjugué, qui comprend le constituant (a) suivant et au moins un composé choisi parmi les constituants (b), (c) et (d) suivants :

(a) un complexe d'un métal de transition répondant au choix à l'une des formules suivantes :

$(Cp_1\text{-}Z\text{-}Y)MX^1X^2$ ou bien $(Cp_1Cp_2\text{-}Z)MX^1X^2$, où
M est au choix l'un des métaux suivants : Ti, Zr, Hf, Rn, Nd, Sm, Ru,
$Cp_1$ et $Cp_2$ sont chacun un groupe cyclopentadiényle, indényle ou fluorényle,
Y est un ligand contenant un atome d'oxygène, d'azote, de phosphore ou de soufre,
Z représente C, O, B, S, Ge, Si, Sn ou un groupe contenant l'un quelconque de ces atomes,
$X^1$ et $X^2$ représentent chacun un ligand anionique ou neutre qui est une base de Lewis ;

(b) un composé qui réagit avec le métal M de (a) pour former un complexe ionique ;
(c) un composé organoaluminium ; et

(d) un aluminoxane.

On notera que les copolymères obtenus dans ce document EP-A-891 993 comportent un taux molaire réduit de diène conjugué inséré (inférieur à 10 %), et qu'ils comportent toujours des unités cycliques (de type cyclopentane et cyclopropane).

Des systèmes catalytiques comprenant spécifiquement un complexe de lanthanides et permettant de copolymériser diènes conjugués et alpha-oléfines ont également été reportés dans la littérature. Kaulbach. et al ont décrit dans Angew. Makromol. Chem. 1995, 226, p. 101 la copolymérisation butadiène/ octène ou dodécène avec un complexe d'octoate de néodyme. Visseaux M. et al ont décrit dans Macromol. Chem. Phys. 2001, 202, p. 2485 la copolymérisation alpha-oléfine/ diène conjugué (butadiène ou isoprene) avec un complexe allylique de lanthanide.

Un inconvénient majeur de ces derniers systèmes catalytiques est que le taux molaire d'alpha-oléfine insérée est toujours réduit, étant inférieur à 20 %.

Il est par ailleurs connu de copolymériser l'éthylène et un diène conjugué, tel que le butadiène, au moyen de complexes halogénés de lanthanide qui sont alkylables *in situ* dans le milieu de polymérisation via un co-catalyseur. Ainsi, le document de brevet européen au nom des demanderesses EP-A-1 092 731 enseigne d'utiliser à cet effet un système catalytique comprenant :

- d'une part, un complexe organométallique représenté par l'une des formules suivantes :

A': 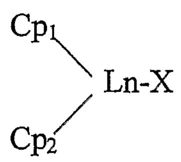 , B': 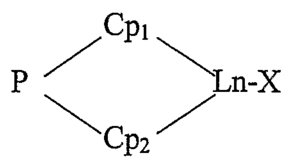

où Ln représente un métal d'un lanthanide dont le numéro atomique peut aller de 57 à 71,
où X représente un halogène pouvant être le chlore, le fluor, le brome ou l'iode,
où, dans la formule A', sont reliées au métal Ln deux molécules de ligands $Cp_1$ et $Cp_2$ constituées chacune d'un groupe cyclopentadiényle ou fluorényle substitué ou non,
où, dans la formule B', est reliée au métal Ln une molécule de ligand, constituée de deux groupes cyclopentadiényle ou fluorényle $Cp_1$ et $Cp_2$ substitués ou non et reliés entre eux par un pont P de formule $MR_2$, où M est un élément de la colonne IVA de la classification périodique de Mendeleev, et où R est un groupe alkyle comprenant de 1 à 20 atomes de carbone, et

- d'autre part, un co-catalyseur choisi dans le groupe comprenant un alkyl magnésium, un alkyl lithium, un alkyl aluminium, un réactif de Grignard et un mélange de ces constituants.

Le but de la présente invention est de proposer un nouveau système catalytique qui remédie aux inconvénients précités, et ce but est atteint en ce que les demanderesses viennent de découvrir d'une manière surprenante qu'un système catalytique comprenant :

(i) un complexe organométallique représenté par la formule générique suivante :

(1) $\{[P(Cp)(Fl)Ln(X)(L_x)\}_p$

où Ln représente un atome de lanthanide de numéro atomique allant de 57 à 71, auquel est reliée une molécule de ligand comprenant des groupes cyclopentadiényle Cp et fluorényle Fl qui sont chacun indépendamment substitués ou non et reliés entre eux par un pont P de formule $MR^1R^2$, où M est un élément de la colonne IVA de la classification périodique de Mendeleev et où $R^1$ et $R^2$, identiques ou différents, représentent chacun des groupes alkyle ayant de 1 à 20 atomes de carbone ou bien des groupes cycloalkyle ou phényle ayant de 6 à 20 atomes de carbone,
où X représente un atome d'halogène pouvant être le chlore, le fluor, le brome ou l'iode,
où L comprend une molécule complexante optionnelle, telle qu'un éther, et éventuellement une molécule sensiblement moins complexante, telle que du toluène,
où p est un entier naturel égal ou supérieur à 1 et x est égal ou supérieur à 0, et

(ii) un co-catalyseur appartenant au groupe constitué par les alkyl magnésiums, les alkyl lithiums, les alkyl aluminiums, les réactifs de Grignard et les mélanges de ces constituants,

est utilisable pour l'obtention d'un copolymère d'un diène conjugué et d'au moins une mono-oléfine, telle qu'une alpha-oléfine et/ou de l'éthylène, et plus particulièrement d'un copolymère d'au moins un diène conjugué et d'au moins une alpha-oléfine ayant de 3 à 18 atomes de carbone, ledit copolymère présentant une masse moléculaire moyenne en nombre pouvant être supérieure à 30000 g/mol, voire à 60000 g/mol, et comprenant des unités issues dudit ou desdits diène(s) conjugué(s) selon un taux molaire supérieur à 40 % et des unités issues de ladite ou desdites alpha-oléfine(s) selon un taux molaire égal ou supérieur à 10 %.

On notera que ledit complexe organométallique est activable *in situ* dans le milieu de polymérisation via ledit co-catalyseur, lequel a pour double fonction de créer une liaison métal-carbone et de purifier le milieu de polymérisation.

Ledit complexe organométallique est par exemple représenté par la formule suivante :

(1bis) 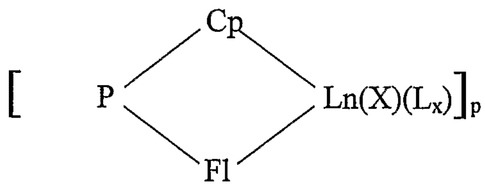

Selon un exemple de réalisation de l'invention, ledit complexe organométallique est tel que p est égal à 2, étant alors un dimère représenté par la formule suivante :

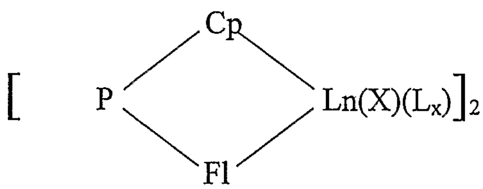

Egalement à titre préférentiel, lesdits groupes cyclopentadiényle Cp et fluorényle Fl sont tous deux non substitués dans l'une ou l'autre des formules précitées, répondant respectivement aux formules $C_5H_4$ et $C_{13}H_8$.

Egalement à titre préférentiel en relation avec l'une quelconque des caractéristiques précitées selon l'invention, ledit pont P répond à la formule $SiR^1R^2$. A titre encore plus préférentiel, $R^1$ et $R^2$ sont chacun indépendamment des groupes alkyle, tels que des groupes méthyle.

Egalement à titre préférentiel en relation avec l'une quelconque des caractéristiques précitées selon l'invention, ledit complexe organométallique est tel que le lanthanide Ln est le néodyme.

Egalement à titre préférentiel en relation avec l'une quelconque des caractéristiques précitées selon l'invention, ledit co-catalyseur est un alkyl magnésium tel que le butyloctyl magnésium, ou un mélange d'un alkyl aluminium tel que l'hydrure de diisobutyl aluminium et d'un alkyl lithium tel que le butyl lithium qui sont présents en quantités sensiblement stoechiométriques dans ce mélange.

Egalement à titre préférentiel en relation avec l'une quelconque des caractéristiques précitées selon l'invention, le rapport molaire (co-catalyseur / complexe organométallique) est inférieur ou égal à 5, pour que ledit copolymère obtenu puisse présenter une masse moléculaire moyenne en nombre Mn supérieure à 30 000 g/mol.

A titre encore plus préférentiel, ledit rapport molaire (co-catalyseur / complexe organométallique) est inférieur ou égal à 2, pour que ledit copolymère obtenu puisse présenter une masse moléculaire moyenne en nombre Mn supérieure à 60 000 g/mol.

Un procédé de préparation selon l'invention dudit système catalytique comprend :

a) la préparation dudit complexe organométallique comprenant :

(i) la réaction avec un alkyl lithium d'une molécule hydrogénée de ligand, représentée par la formule (2) suivante, pour obtenir un sel de lithium répondant à la formule (3) suivante :

(2) 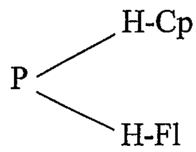 (3) 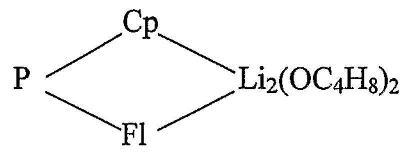

(ii) la réaction dans un solvant complexant dudit sel avec un trihalogénure anhydre dudit lanthanide de formule $LnX_3$ où X est ledit halogène,

(iii) l'évaporation dudit solvant complexant, puis l'extraction du produit obtenu en (ii) dans un solvant sensiblement moins complexant que le solvant utilisé en (ii), puis, éventuellement,

(iv) la cristallisation du produit extrait en (iii) pour obtenir ledit complexe organométallique totalement exempt dudit solvant complexant, puis

b) l'adjonction dudit co-catalyseur audit complexe organométallique préparé en a).

De préférence, l'une au moins des conditions suivantes est vérifiée :

- ledit alkyl lithium utilisé en a) (i) est le butyl lithium, et/ou
- ledit solvant complexant utilisé en a) (ii) est le tétrahydrofuranne, et/ou
- ledit solvant sensiblement moins complexant utilisé en a) (iii) est l'heptane (pratiquement pas complexant) ou le toluène (« moyennement » complexant).

De préférence, ce procédé est tel que lesdits groupes cyclopentadiényle Cp et fluorényle Fl sont tous deux non substitués, répondant respectivement aux formules $C_5H_4$ et $C_{13}H_8$.

Egalement à titre préférentiel en relation avec l'une quelconque des caractéristiques précitées, ce procédé est tel que ledit pont P répond à la formule $SiR^1R^2$.

A titre encore plus préférentiel, ce procédé est tel que $R^1$ et $R^2$ sont chacun indépendamment des groupes alkyle, tels que des groupes méthyle.

Egalement à titre préférentiel en relation avec l'une quelconque des caractéristiques précitées, ce procédé est tel que ledit lanthanide Ln est le néodyme.

Egalement à titre préférentiel en relation avec l'une quelconque des caractéristiques précitées, ce procédé est tel que ledit co-catalyseur est un alkyl magnésium tel que le butyloctyl magnésium, ou un mélange d'un alkyl aluminium tel que l'hydrure de diisobutyl aluminium et d'un alkyl lithium tel que le butyl lithium, présents en quantités sensiblement stoechiométriques dans ledit mélange.

Egalement à titre préférentiel en relation avec l'une quelconque des caractéristiques précitées, ce procédé est tel que le rapport molaire (nombre de moles dudit co-catalyseur / nombre de moles dudit complexe organométallique) est inférieur ou égal à 5, le système catalytique étant utilisable pour que le copolymère présente une masse moléculaire Mn supérieure à 30 000 g/mol.

A titre encore plus préférentiel, ce procédé est tel que ledit rapport molaire (co-catalyseur / complexe organométallique) est inférieur ou égal à 2, le système catalytique étant utilisable pour que le copolymère présente une masse moléculaire Mn supérieure à 60 000 g/mol.

Un procédé de préparation selon l'invention d'un copolymère d'au moins un diène conjugué et d'au moins une mono-oléfine comprend la réaction dudit système catalytique tel que défini précédemment dans un solvant hydrocarboné inerte, en présence dudit ou desdits diène(s) conjugué(s) et de ladite ou desdites mono-oléfine(s).

De préférence, ce procédé est tel que ledit copolymère comporte des unités issues d'un diène conjugué, tel que le butadiène ou l'isoprène, et des unités issues d'au moins une mono-oléfine appartenant au groupe constitué par l'éthylène, les alpha-oléfines et les composés vinylaromatiques.

Avantageusement, en relation avec l'une quelconque des caractéristiques précitées, ce procédé est tel que ledit copolymère comporte des unités issues d'une alpha-oléfine ayant de 3 à 18 atomes de carbone selon un taux molaire égal ou supérieur à 10 %, ou bien qu'il comporte des unités issues de l'éthylène et, selon un taux molaire égal ou supérieur à 10 %, des unités issues d'une alpha-oléfine ayant de 3 à 18 atomes de carbone.

Dans l'un ou l'autre de ces deux derniers cas, ce procédé est avantageusement tel que les unités issues dudit diène conjugué sont présentes dans ledit copolymère selon un taux molaire supérieur à 40 %, de préférence supérieur à 50 %.

Avantageusement, en relation avec l'une quelconque des caractéristiques précitées, ce procédé est tel que les unités issues dudit ou desdits diène(s) conjugué(s) présentent un taux d'enchaînements trans-1,4 supérieur à 70 %.

Avantageusement, en relation avec l'une quelconque des caractéristiques précitées, ce procédé est tel que le rapport molaire (co-catalyseur / complexe organométallique) est inférieur ou égal à 5, pour que la masse moléculaire

Mn du copolymère soit supérieure à 30 000 g/mol.

A titre encore plus avantageux, ce procédé est tel que ledit rapport molaire (co-catalyseur / complexe organométallique) est inférieur ou égal à 2, pour que ledit copolymère présente une masse moléculaire Mn supérieure à 60 000 g/mol.

Un copolymère d'au moins un diène conjugué et d'au moins une alpha-oléfine ayant de 3 à 18 atomes de carbone selon l'invention est susceptible d'être obtenu par un procédé de copolymérisation tel que défini précédemment, et ce copolymère selon l'invention est de préférence tel qu'il satisfait à la fois aux conditions suivantes :

- la masse moléculaire moyenne en nombre dudit copolymère est supérieure à 60 000 g/mol,
- ledit copolymère comprend des unités issues dudit ou desdits diène(s) conjugué(s) selon un taux molaire supérieur à 40 % et inférieur ou égal à 90 %, et des unités issues de ladite ou desdites alpha-oléfine(s) selon un taux molaire inférieur à 60 % et égal ou supérieur à 10 %,
- lesdites unités issues dudit ou desdits diène(s) conjugué(s) présentent un taux d'enchaînements trans-1,4 supérieur à 70 %, et
- ledit copolymère est dépourvu d'unité cyclique.

Selon un exemple avantageux de réalisation de l'invention en relation avec l'une ou l'autre des deux caractéristiques précitées, ledit copolymère est constitué d'un copolymère d'un diène conjugué, tel que le butadiène ou l'isoprène, et d'une alpha-oléfine ayant de 3 à 18 atomes de carbone, telle que le propène, le butène, l'hexène ou l'octène.

A titre encore plus préférentiel, ledit copolymère selon l'invention comprend les unités issues dudit ou desdits diène(s) conjugué(s) selon un taux molaire supérieur à 60 % et inférieur ou égal à 80 %, et les unités issues de ladite ou desdites alpha-oléfine(s) selon un taux molaire inférieur à 40 % et égal ou supérieur à 20 %.

Selon une variante avantageuse de réalisation de l'invention, ledit copolymère est constitué d'un terpolymère d'un diène conjugué, tel que le butadiène ou l'isoprène, de l'éthylène et d'une alpha-oléfine de 3 à 18 atomes de carbone, telle que le propène, le butène, l'hexène ou l'octène.

Selon une autre caractéristique de l'invention, ledit copolymère est tel que chaque unité issue de ladite ou desdites alpha-oléfines est insérée dans la chaîne dudit copolymère entre deux unités issues dudit ou de chaque diène conjugué, de telle sorte que l'ensemble des unités dudit copolymère présente une répartition régulière de type pratiquement alternée (également appelée « pseudo-alternée » par l'homme du métier).

Les caractéristiques précitées de la présente invention, ainsi que d'autres, seront mieux comprises à la lecture de la description suivante de plusieurs exemples de réalisation de l'invention, donnés à titre illustratif et non limitatif, en comparaison de deux derniers exemples comparatifs illustrant un état antérieur de la technique.

Pour tous les exemples suivants, on a opéré sous argon et l'on a préalablement séché les solvants sur tamis moléculaire 3A sous balayage d'argon. Les alpha-oléfines liquides ainsi que le styrène ont été séchés sur $CaH_2$ ou NaH puis distillés.

La microstructure des copolymères obtenus dans ces exemples a été déterminée par les techniques de RMN $^{1}H$ et de RMN $^{13}C$. On a utilisé un spectromètre « BRUKER DRX » 400, à des fréquences de 400 MHz pour la technique de RMN $^{1}H$ et de 100,6 MHz pour la technique de RMN $^{13}C$. On se reportera à l'annexe jointe pour un description détaillée de ces techniques.

Les températures de transition vitreuse ont été mesurées par DSC (Differential Scanning Calorimetry) sur un appareil « Setaram DSC 131 ». Le programme de température utilisé correspond à une montée en température de -120° C à 150° C à la vitesse de 10 ° C/min.

Les masses moléculaires Mn et les indices de polymolécularité ont été déterminés par chromatographie d'exclusion stérique en utilisant l'appareil et les conditions d'analyse décrites ci-après. Les valeurs de masses moléculaires indiquées dans les exemples suivants sont exprimées en équivalent polystyrène.

<u>Appareil</u> : Waters, 515 HPLC (pompe) et RI 410 (détecteur).
<u>Colonnes</u> : 1 colonne « Waters Styragel HR 4E » + 2 colonnes « Waters Styragel HR 5E ».
<u>Température</u> : T(colonne) = 45° C, T(détecteur) = 40° C.
<u>Solvant</u> : THF.
<u>Vitesse d'élution</u> : 1 ml/min.
Etalons : Polystyrène (Mn : 580 à 3 150 000 g/mol).

**Exemple 1 : Synthèse du complexe organométallique $[Me_2Si(C_5H_4)(C_{13}H_8)]NdCl(OC_4H_8)_x$.**

**- synthèse du ligand $Me_2Si(C_5H_5)(C_{13}H_9)$ :**

Le ligand $Me_2Si(C_5H_4)(C_{13}H_9)$, où Me désigne un groupe méthyle, a été synthétisé selon un mode opératoire

décrit dans la littérature (Alt et al J. Organomet. Chem. 1996, 509, pp. 63-71).

**- synthèse du sel $[Me_2Si(C_5H_4)(C_{13}H_8)]Li_2(OC_4H_8)_2$ :**

A une solution de 2,8 g du ligand $Me_2Si(C_5H_5)(C_{13}H_9)$ dans 150 ml de THF sont ajoutés à température ambiante 12,1 ml de BuLi 1,6 M. La solution est agitée 4 h puis le THF est évaporé. Le résidu est séché sous vide puis lavé à froid par 2 fois 50 ml d'heptane. Un solide jaune est isolé. L'analyse RMN $^1H$ de ce solide a été réalisée avec un spectromètre « BRUKER 300 MHz » dans le domaine THF-d8 : $\delta$(déplacement chimique en ppm) =

7,85 (d, J 8 Hz, 2H, Fl),
7,77 (d, J 8 Hz, 2H, Fl),
6,79 (dd, J 8 Hz et 7 Hz, 2H, Fl),
6,44 (dd, J 8 Hz et 7 Hz, 2H, Fl),
6,15 (m, 2H, Cp),
5,83 (m, 2H, Cp),
3,62 (THF),
1,78 (THF),
0,67 (s, 6H, $SiMe_2$).

La structure du sel obtenu est $[Me_2Si(C_5H_4)(C_{13}H_8)]Li_2(OC_4H_8)_2$.

**- synthèse du complexe organométallique $[Me_2Si(C_5H_4)(C_{13}H_8)]NdCl(OC_4H_8)_x$ :**

0,58 g (2,3 mmol) de $NdCl_3$ sont agités 1 nuit à reflux dans 50 ml de THF. A la suspension obtenue est ajoutée à -20° C une solution de 0,82 g du sel $[Me_2Si(C_5H_4)(C_{13}H_8)]Li_2(OC_4H_8)_2$ dans 50 ml de THF. La solution formée est alors agitée 24 h à température ambiante. Le THF est évaporé, le résidu obtenu repris au toluène. Le sel (LiCl) est filtré et l'on récupère par évaporation du toluène le complexe organométallique de formule $[Me_2Si(C_5H_4)(C_{13}H_8)]NdCl(OC_4H_8)_x$.

**Exemple 2 : Copolymérisation du butadiène et de l'éthylène au moyen du complexe organométallique de l'exemple 1 et de divers co-catalyseurs.**

Trois essais selon l'invention de copolymérisation de l'éthylène et du butadiène ont été réalisés selon le mode opératoire décrit ci-après, en plus d'un essai « témoin » d'homopolymérisation de l'éthylène.

Dans un réacteur sous argon, on introduit successivement une solution composée de 300 ml de toluène, d'une quantité déterminée $x_c$ (mg) du complexe organométallique de formule $[Me_2Si(C_5H_4)(C_{13}H_8)]NdCl(OC_4H_8)_x$ préparé à l'exemple 1 et d'un co-catalyseur selon l'invention puis un mélange d'éthylène et de butadiène avec une fraction molaire y (%) de butadiène. La pression interne du réacteur a été maintenue à 4 bars lorsque la fraction y de butadiène le permet. La température du réacteur de polymérisation a été maintenue à 80° C pendant la polymérisation.

Après un temps t (min.) de réaction, la polymérisation est stoppée par refroidissement et dégazage du réacteur, puis le copolymère est obtenu par précipitation dans du méthanol. Après séchage, on obtient une masse m (g) de copolymère comprenant des unités issues du butadiène selon une fraction molaire z (%).

On a utilisé comme co-catalyseur le butyloctylmagnésium (« BOMAG » en abrégé ci-après) ou un mélange de butyllithium (« BuLi ») et d'hydrure de diisobutylaluminium (« HDiBA ») avec les proportions molaires suivantes :

néodyme / BuLi / HDiBA = 1/10/10, et néodyme / BOMAG = 1/20
(i.e. 20 équivalents molaires de co-catalyseur par rapport au néodyme).

La description des quatre essais de polymérisation est présentée dans le tableau 1 ci-après.

Tableau 1 :

| essais | $x_c$ (mg) | Co-catalyseur | m (g) | t (min) | y (%) | z (%) | Insertion butadiène (taux molaires) | |
|---|---|---|---|---|---|---|---|---|
| | | | | | | | % 1,2 | % trans-1,4 |
| 2-1 | 34 | BuLi / HDiBA | 3,4 | 70 | - | - | - | - |
| 2-2 | 45 | BuLi / HDiBA | 4,2 | 50 | 20 | 28 | 4 | 96 |

(suite)

| essais | $x_c$ (mg) | Co-catalyseur | m (g) | t (min) | y (%) | z (%) | Insertion butadiène (taux molaires) | |
|---|---|---|---|---|---|---|---|---|
| | | | | | | | % 1,2 | % trans-1,4 |
| 2-3 | 40 | BuLi/ HDiBA | 5,0 | 120 | 40 | 48 | 4 | 96 |
| 2-4 | 30 | BOMAG | 6,5 | 60 | 20 | 26 | 3 | 97 |

Ces résultats montrent que les copolymères éthylène/ butadiène obtenus aux essais 2-2 à 2-4 comportent des unités issues du butadiène selon une fraction molaire z supérieure à 20 %, et que le taux molaire d'unités trans-1,4 pour ces unités issues du butadiène est supérieur à 90 %.

**Exemples 3 : Copolymérisation du butadiène et de l'octène au moyen du complexe organométallique de l'exemple 1 et de divers co-catalyseurs.**

Exemple 3-1.

Dans un réacteur sous argon, on introduit successivement une solution composée de 10 ml de toluène, de 100 ml d'octène, de 35 mg dudit complexe préparé à l'exemple 1 et 20 équivalents molaires par rapport au néodyme d'un co-catalyseur constitué d'un mélange « BuLi / HDiBA », avec néodyme / BuLi / HDiBA = 1/10/10, puis 25 ml de butadiène. La température du réacteur de polymérisation a été portée à 80° C.

Après 7,5 h de réaction, la polymérisation est stoppée par refroidissement et dégazage du réacteur, puis le copolymère est obtenu par précipitation dans du méthanol. Après séchage sous pression réduite à 70° C, le rendement est de 11,4 g. La masse moléculaire Mn du polymère est de 11470 g/mol (indice Ip = 1,7). La température de transition vitreuse est -71,5° C. L'analyse du copolymère par RMN $^{13}C$ et $^{1}H$ est la suivante (taux molaires) :
octène = 32,0 mol% et butadiène = 68,0 %, avec :
1,2-butadiène = 7,0 % et 1,4-butadiène = 93,0 % dont 96,0 % de trans-1,4.

Exemple 3-2.

Dans un réacteur sous argon, on introduit successivement une solution composée de 10 ml de toluène, de 100 ml d'octène, de 37 mg dudit complexe préparé à l'exemple 1 et 20 équivalents molaires par rapport au néodyme d'un co-catalyseur « BOMAG », puis 25 ml de butadiène. La température du réacteur de polymérisation a été portée à 80° C.

Après 15 h de réaction, la polymérisation est stoppée par refroidissement et dégazage du réacteur, puis le copolymère est obtenu par précipitation dans du méthanol. Après séchage sous pression réduite à 70° C, le rendement est de 13,3 g. La masse moléculaire Mn du polymère est de 8960 g/mol (indice Ip = 1,8). La température de transition vitreuse est - 65,4° C. L'analyse du copolymère par RMN $^{13}C$ et $^{1}H$ est la suivante (taux molaires) :
octène = 29,4 % et butadiène = 70,6 %, avec :
1,2-butadiène = 16,3 % et 1,4-butadiène = 83,7 % dont 97,5 % de trans-1,4.

Exemple 3-3.

Dans un réacteur sous argon, on introduit successivement une solution composée de 10 ml de toluène, de 100 ml d'octène, de 37 mg dudit complexe préparé à l'exemple 1 et 5 équivalents molaires par rapport au néodyme d'un co-catalyseur « BOMAG », puis 25 ml de butadiène. La température du réacteur de polymérisation a été portée à 80° C.

Après 15 h de réaction, la polymérisation est stoppée par refroidissement et dégazage du réacteur, puis le copolymère est obtenu par précipitation dans du méthanol. Après séchage sous pression réduite à 70° C, le rendement est de 13,1 g. La masse moléculaire Mn du copolymère est de 30650 g/mol (indice Ip = 2,3). La température de transition vitreuse est - 69,0° C. L'analyse du copolymère par RMN $^{13}C$ et $^{1}H$ est la suivante (taux molaires) :
octène = 28,8 % et butadiène = 71,2 %, avec :
1,2-butadiène = 10,3 % et 1,4-butadiène = 89,7 % dont 96,6 % de trans-1,4.

Exemple 3-4.

Dans un réacteur sous argon, on introduit successivement une solution composée de 10 ml de toluène, de 100 ml d'octène, de 33 mg dudit complexe préparé à l'exemple 1 et 2 équivalents molaires par rapport au néodyme d'un co-catalyseur « BOMAG », puis 25 ml de butadiène. La température du réacteur de polymérisation a été portée à 80° C.
Après 15 h de réaction, la polymérisation est stoppée par refroidissement et dégazage du réacteur, puis le copolymère est obtenu par précipitation dans du méthanol. Après séchage sous pression réduite à 70° C, le rendement est de 6,8 g. La masse moléculaire Mn du copolymère est de 67350 g/mol (indice Ip = 1,9). La température de transition vitreuse est - 69,6° C. L'analyse du copolymère par RMN $^{13}C$ et $^{1}H$ est la suivante (taux molaires) :
octène = 26,2 % et butadiène = 73,8 %, avec :
1,2-butadiène = 10,1 % et 1,4-butadiène = 89,9 % dont 93,8 % de trans-1,4.

Exemple 3-5.

Dans un réacteur sous argon, on introduit successivement une solution composée de 200 ml de toluène, de 50 ml d'octène, de 30 mg dudit complexe préparé à l'exemple 1 et 20 équivalents molaires par rapport au néodyme d'un co-catalyseur « BOMAG », puis 30 ml de butadiène. La température du réacteur de polymérisation a été portée à 80° C.
Après 22 h de réaction, la polymérisation est stoppée par refroidissement et dégazage du réacteur, puis le copolymère est obtenu par précipitation dans du méthanol. Après séchage sous pression réduite à 70° C, le rendement est de 7,6 g. La masse moléculaire Mn du copolymère est de 7120 g/mol (indice Ip = 2,0). La température de transition vitreuse est de -64° C. L'analyse du copolymère par RMN $^{13}C$ et $^{1}H$ est la suivante (taux molaires) :
octène = 13,7 % et butadiène = 86,3 %, avec :
1,2-butadiène = 24,7 % et 1,4-butadiène = 75,3 % dont 95,2 % de trans-1,4.
Les résultats obtenus à ces essais 3-1 à 3-5 montrent que les copolymères obtenus présentent un taux molaire d'unités issues de l'octène qui est compris entre 10 et 60 % et un taux molaire d'unités issues du butadiène qui est compris entre 90 et 40 %.
On notera que les unités de ces copolymères qui sont issues du butadiène présentent un taux molaire d'unités trans-1,4 qui est toujours supérieur à 70 %.
On notera en outre que les essais 3-3 et 3-4 conduisent avantageusement à des copolymères octène/ butadiène de masse moléculaire Mn relativement élevée (respectivement supérieure à 30000 et à 60000 g/mol), du fait du rapport molaire (co-catalyseur / complexe organométallique) très réduit qui a été utilisé (rapport égal à 5 et à 2 pour ces essais 3-3 et 3-4, respectivement).

**Exemple 4 : Copolymérisation du butadiène et de l'hexène au moyen du complexe organométallique de l'exemple 1 et d'un co-catalyseur.**

Dans un réacteur sous argon, on introduit successivement une solution composée de 10 ml de toluène, de 100 ml d'hexène, de 39 mg dudit complexe préparé à l'exemple 1 et 20 équivalents molaires par rapport au néodyme d'un co-catalyseur constitué d'un mélange « BuLi / HDiBA » avec néodyme / BuLi / HDiBA = 1/10/10, puis 25 ml de butadiène. La température du réacteur de polymérisation a été portée à 80° C.
Après 17 h de réaction, la polymérisation est stoppée par refroidissement et dégazage du réacteur, puis le copolymère est obtenu par précipitation dans du méthanol. Après séchage sous pression réduite à 70° C, le rendement est de 18,9 g. La masse moléculaire Mn du polymère est de 17500 g/mol (indice Ip = 1,9). La température de transition vitreuse est -68, 7° C. L'analyse du copolymère par RMN $^{13}C$ et $^{1}H$ est la suivante(taux molaires) :
hexène = 29,8 % et butadiène = 70,2 %, avec :
1,2-butadiène = 7,5 % et 1,4-butadiène = 92,5 % dont 95,0 % de trans-1,4.

**Exemple 5 : Copolymérisation du butadiène et du butène au moyen du complexe organométallique de l'exemple 1 et d'un co-catalyseur.**

Dans un réacteur sous argon, on introduit successivement une solution composée de 100 ml de toluène, de 37 mg dudit complexe préparé à l'exemple 1 et 20 équivalents molaires par rapport au néodyme d'un co-catalyseur constitué d'un mélange « BuLi / HDiBA » avec néodyme / BuLi / HDiBA = 1/10/10, puis 25 ml de butadiène et 25 ml de butène. La température du réacteur de polymérisation a été portée à 80° C.
Après 18 h de réaction, la polymérisation est stoppée par refroidissement et dégazage du réacteur, puis le copolymère est obtenu par précipitation dans du méthanol. Après séchage sous pression réduite à 70° C, le rendement

est de 10,7 g. La masse moléculaire Mn du copolymère est de 13200 g/mol (indice Ip = 1,9). La température de transition vitreuse est de -74,6° C. L'analyse du copolymère par RMN $^{13}C$ et $^{1}H$ est la suivante (taux molaires) :
butène = 18,6 % et butadiène = 81,4 %, avec :
1,2-butadiène = 9,6 % et 1,4-butadiène = 90,4 % dont 95,0 % de trans-1,4.

**Exemple 6 : Copolymérisation du butadiène et de l'hexadécène au moyen du complexe organométallique de l'exemple 1 et d'un co-catalyseur.**

Dans un réacteur sous argon, on introduit successivement une solution composée de 10 ml de toluène, de 100 ml d'hexadécène, de 32 mg dudit complexe préparé à l'exemple 1 et 20 équivalents molaires par rapport au néodyme d'un co-catalyseur constitué d'un mélange « BuLi / HDiBA » avec néodyme / BuLi / HDiBA = 1/10/10, puis 25 ml de butadiène. La température du réacteur de polymérisation a été portée à 80° C.

Après 7 h de réaction, la polymérisation est stoppée par refroidissement et dégazage du réacteur, puis le copolymère est obtenu par précipitation dans du méthanol. Après séchage sous pression réduite à 70° C et distillation de l'hexadécène résiduel, le rendement est de 9,9 g. La masse moléculaire Mn du copolymère est de 21530 g/mol (indice Ip = 1,8). La température de transition vitreuse ne peut être déterminée en raison de la présence d'une fusion très large (Tf (sommet du pic) = - 9° C). L'analyse du copolymère par RMN $^{13}C$ et $^{1}H$ est la suivante (taux molaires) :
hexadécène = 21,8 % et butadiène = 78,2 %, avec :
1,2-butadiène = 10,2 % et 1,4-butadiène = 89,8 % dont 93,8 % de trans-1,4.

**Exemple 7 : Copolymérisation du butadiène et du propène au moyen du complexe organométallique de l'exemple 1 et d'un co-catalyseur.**

Dans un réacteur sous argon, on introduit successivement une solution composée de 450 ml de toluène, de 25 mg dudit complexe préparé à l'exemple 1 et de 20 équivalents molaires par rapport au néodyme d'un co-catalyseur constitué d'un mélange « BuLi / HDiBA » avec néodyme / BuLi / HDiBA = 1/10/10, 30 ml de butadiène ainsi qu'une quantité de propylène appropriée pour atteindre dans le réacteur une pression totale P = 7 bars quand T = 80° C.

Après 15 h de réaction, la polymérisation est stoppée par refroidissement et dégazage du réacteur, puis le copolymère est obtenu par précipitation dans du méthanol. Après séchage sous pression réduite à 70° C, le rendement est de 7,3 g. La masse moléculaire Mn du copolymère est de 9120 g/mol (Ip = 2,0). La température de transition vitreuse est de -75,3° C. L'analyse du copolymère par RMN $^{13}C$ et $^{1}H$ donne (taux molaires) : propène = 35,8 % et butadiène = 64,2 %, et
1,2-butadiène = 6,1 %, 1,4-butadiène = 93,9 % dont 97,4 % de trans-1,4.

**Exemple 8 : Copolymérisation du butadiène et du styrène au moyen du complexe organométallique de l'exemple 1 et d'un co-catalyseur.**

Dans un réacteur sous argon, on introduit successivement une solution composée de 50 ml de toluène, de 50 ml de styrène, de 30 mg dudit complexe préparé à l'exemple 1 et 20 équivalents molaires par rapport au néodyme d'un co-catalyseur « BOMAG », puis 25 ml de butadiène. La température du réacteur de polymérisation a été portée à 80° C.

Après 14 h de réaction, la polymérisation est stoppée par refroidissement et dégazage du réacteur, puis le copolymère est obtenu par précipitation dans du méthanol. Après séchage sous pression réduite à 70° C, le rendement est de 46,4 g. La masse moléculaire Mn du copolymère est de 25900 g/mol (indice Ip = 2,0). La température de transition vitreuse est + 16° C. L'analyse du copolymère par RMN $^{13}C$ et $^{1}H$ est la suivante (taux molaires):
styrène = 57 % et butadiène = 43 %, avec 1,4-butadiène = 100 % dont 100 % de trans-1,4.

**Exemple 9 : Terpolymérisation du butadiène, de l'éthylène et de l'octène au moyen du complexe organométallique de l'exemple 1 et d'un co-catalyseur.**

Dans un réacteur sous argon, on introduit successivement une solution composée de 10 ml de toluène, 100 ml d'octène, de 37 mg dudit complexe préparé à l'exemple 1 et 20 équivalents molaires par rapport au néodyme d'un co-catalyseur constitué d'un mélange « BuLi / HDiBA » avec néodyme / BuLi / HDiBA = 1/10/10, puis 25 ml de butadiène et enfin une quantité d'éthylène de manière à atteindre dans le réacteur une pression totale P = 4,5 bars quand la température T est de 80° C. La pression interne du réacteur est alors maintenue à 4,5 bars.

Après 3,5 h de réaction, la polymérisation est stoppée par refroidissement et dégazage du réacteur, puis le terpolymère est obtenu par précipitation dans du méthanol. Après séchage sous pression réduite à 70° C, le rendement est de 25,7 g. La masse moléculaire Mn du terpolymère est 13300 g/mol (indice Ip = 2,9). La température de transition vitreuse est - 78° C. L'analyse du terpolymère par RMN $^{13}C$ et $^{1}H$ est la suivante (taux molaires):

octène = 14,4 %, éthylène = 28,8 % et butadiène = 56,8 %, avec
1,2-butadiène = 5,7 % et 1,4-butadiène = 94,3 % dont 99,3 % de trans-1,4.

**Exemples comparatifs 10 : Copolymérisation butadiène/ hexène et terpolymérisation éthylène/ butadiène/ hexène au moyen d'un complexe organométallique connu et d'un co-catalyseur.**

Le système catalytique utilisé est l'un de ceux décrits dans le document de brevet précité EP-A-1 092 731, comme étant utilisable pour la copolymérisation de l'éthylène et du butadiène.

Ce système catalytique comprend un complexe organométallique de formule $[Me_2Si(Me_3SiC_5H_3)_2]NdCl$, où Me désigne un groupe méthyle, et un co-catalyseur BuLi / HDiBA.

On notera que ce complexe organométallique comprend deux groupes cyclopentadiényle substitués, à la différence du complexe organométallique selon l'invention qui comprend spécifiquement un groupe cyclopentadiényle et un groupe fluorényle.

<u>Exemple 10-1 (Copolymérisation butadiène/ hexène).</u>

Dans un réacteur sous argon, on introduit successivement une solution composée de 10 ml de toluène, de 100 ml d'hexène, de 42,3 mg de ce complexe connu de formule $[Me_2Si(Me_3SiC_5H_3)_2]NdCl$ et 20 équivalents molaires par rapport au néodyme du co-catalyseur constitué d'un mélange « BuLi / HDiBA » avec néodyme / BuLi / HDiBA = 1/10/10, puis 30 ml de butadiène. La température du réacteur de polymérisation a été portée à 80° C.

Après 28 h de réaction, la polymérisation est stoppée par refroidissement et dégazage du réacteur, puis le copolymère est obtenu par précipitation dans du méthanol. Après séchage sous pression réduite à 70° C, le rendement est de 5,0 g. La masse moléculaire Mn du copolymère est 5900 g/mol (Ip = 2,5). L'analyse du copolymère par RMN $^{13}C$ et $^1H$ est la suivante (taux molaires) :
hexène = 11,6 % et butadiène = 88,4 %, avec :
1,2-butadiène = 5,3 % et 1,4-butadiène = 94,7 % dont 94,5 % de trans-1,4.

On notera que le copolymère butadiène/ hexène obtenu à l'exemple 4 selon l'invention (copolymérisation avec le complexe organométallique selon l'exemple 1) présentait un taux molaires d'unités issues de l'hexène beaucoup plus élevé (29,8% contre 11,6 % seulement dans cet exemple 10-1), et que le rendement de la copolymérisation relative à cet exemple 4 (18,9 g) était très supérieur à celui de cet exemple comparatif 10-1.

<u>Exemple 10-2 (Terpolymérisation éthylène/ butadiène/ hexène).</u>

Dans un réacteur sous argon, on introduit successivement une solution composée de 10 ml de toluène, de 100 ml d'hexène, de 33 mg de ce complexe connu de formule $[Me_2Si(Me_3SiC_5H_3)_2]NdCl$ et 20 équivalents molaires par rapport au néodyme du co-catalyseur constitué d'un mélange « BuLi / HDiBA » avec néodyme / BuLi / HDiBA = 1/10/10, puis une quantité d'un mélange butadiène/ éthylène (contenant 20 % en moles de butadiène), de manière à atteindre dans le réacteur une pression totale P = 4bars quand la température T est de 80° C. La pression interne du réacteur est alors maintenue à 4 bars.

Après 2 h de réaction, la polymérisation est stoppée par refroidissement et dégazage du réacteur, puis le terpolymère est obtenu par précipitation dans du méthanol. Après séchage sous pression réduite à 70° C, le rendement est de 6,4 g. La masse moléculaire Mn du terpolymère est 2600 g/mol (Ip = 1,5). L'analyse du terpolymère par RMN $^{13}C$ et $^1H$ est la suivante (taux molaires) :

hexène = 0,8 %, éthylène = 76,0 % et butadiène = 23,2 %, avec
1,2-butadiène = 1,4 % et 1,4-butadiène = 98,6 % dont 100,0 % de trans-1,4.

On notera que le taux molaire d'unités issues de l'hexène est extrêmement réduit, étant inférieur à 1 %.

**Exemple comparatif 11 : Copolymérisation butadiène/ hexène au moyen d'un autre complexe organométallique connu et d'un co-catalyseur.**

Le système catalytique utilisé ici est l'un de ceux décrits dans le document de brevet précité EP-A-1 092 731, comme étant utilisable pour la copolymérisation de l'éthylène et du butadiène.

Ce système catalytique comprend un complexe organométallique de formule $[Me_2Si(C_{13}H_8)_2]NdCl$, où Me désigne un groupe méthyle, et un co-catalyseur BuLi / HDiBA.

On notera que ce complexe organométallique comprend deux groupes fluorényle, à la différence du complexe organométallique selon l'invention.

Dans un réacteur sous argon, on introduit successivement une solution composée de 10 ml de toluène, de 100 ml d'hexène, de 28 mg de ce complexe connu de formule $[Me_2Si(C_{13}H_8)_2]NdCl$ et de 20 équivalents molaires par rapport au néodyme du co-catalyseur constitué d'un mélange «BuLi / HDiBA» avec néodyme / BuLi / HDiBA = 1/10/10, puis 25 ml de butadiène. La température du réacteur de polymérisation a été portée à 80° C.

Après 18 h de réaction, la polymérisation est stoppée par refroidissement et dégazage du réacteur, puis le copolymère est obtenu par précipitation dans du méthanol. Après séchage sous pression réduite à 70° C, le rendement est de 0,5 g. On obtient deux fractions de copolymère (très faible rendement), l'une de basse masse moléculaire Mn (1830 g/mol, Ip = 1,3) et l'autre de haute masse moléculaire (91160 g/mol, Ip = 1,75). L'analyse du copolymère par RMN $^{13}C$ et $^{1}H$ est la suivante (taux molaires) :
hexène = 1,8 % et butadiène = 98,2 %, avec :
1,2-butadiène = 12,8 % et 1,4-butadiène = 87,2 % dont 68,6 % de trans-1,4.

On notera que le copolymère butadiène/ hexène obtenu à l'exemple 4 selon l'invention (copolymérisation avec le complexe organométallique selon l'exemple 1) présentait un taux molaires d'unités issues de l'hexène beaucoup plus élevé (29,8% contre 1,8 % seulement dans cet exemple 11), et que le rendement de la copolymérisation relative à cet exemple 4 (18,9 g) était très supérieur à celui de cet exemple comparatif 11.

## ANNEXE

### Analyses RMN $^{13}C$ et RMN $^{1}H$ des copolymères d'α-oléfines et du butadiène :

L'appareil utilisé pour ces analyses est un spectromètre Bruker DRX 400 opérant à la fréquence de 400 MHz en proton et 100,6 MHz en carbone. Le solvant d'analyse est un mélange de tetrachloroéthylène (TCE) et de benzène ($C_6D_6$) deutériés. La température de réalisation des spectres est de 90 °C.

### 1) Analyse d'un copolymère par RMN $^{1}H$ :

L'analyse d'un spectre de RMN $^{1}H$ d'un copolymère d'a-oléfine et du butadiène permet d'avoir accès à la composition du copolymère (teneur en butadiène et en α-oléfine) et au rapport entre l'insertion 1,2 et 1,4 du butadiène sans distinguer les insertions 1,4-trans et 1,4-cis.

Les spectres ont été divisés en 5 régions ($S_0$-$S_4$) qui correspondent à des raies caractéristiques des différents protons appartenant à l'α-oléfine (notée **Ol**), au butadiène inséré en 1,2 (**V**) ou en 1,4 (**L**) (voir tableau 1).

Les intégrations des différentes régions définies dans le tableau 1 nous permettent d'accéder très rapidement à la quantité de butadiène totale (B = L + V) ainsi qu'au rapport 1,2 / 1,4 :

- $S_3 = 2V$ soit $V = S_3/2$
- $S_4 = 2L + V$ soit $L = (S_4 - S_3) / 2$

Et donc :

$$\mathbf{B = S_3/4 + S_4/2} \text{ (quantité totale de butadiène)}$$

$$\mathbf{V/(V + L) = (S_3/2) / (S_3/4 + S_4/2)} \text{ (taux de butadiène inséré en 1,2)}$$

On a obtenu par RMN$^{1}H$ deux spectres relatifs à des copolymères hexène-butadiène et hexadécène-butadiène, respectivement, chacun de ces deux copolymères ayant été synthétisé au moyen du complexe organométallique de formule $[Me_2Si(C_5H_4)(C_{13}H_8)]NdCl(OC_4H_8)_x$ préparé à l'exemple 1 et d'un co-catalyseur constitué d'un mélange « BuLi / HDiBA », avec néodyme / BuLi / HDiBA = 1/10/10. Le tableau 1 ci-après détaille l'attribution des raies de ces spectres.

Tableau 1 :

| régions (δ (ppm)) (nombre de protons) | attribution |
|---|---|
| $S_0$ (0,5-1 ppm) 3H (OI) | OI 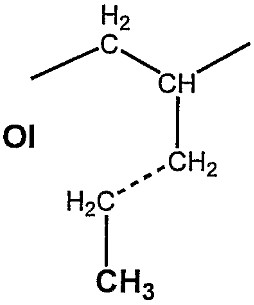 |
| $S_1$ (1-1,65 ppm) (2n-3)H (OI) + 2H (V) | OI 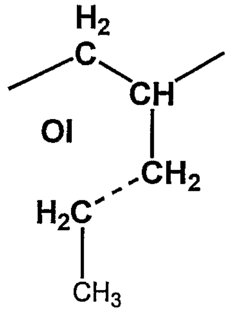 V 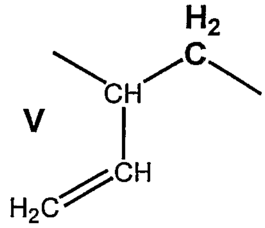 |
| $S_2$ (1,65-2,65 ppm) 4H (L) + 1H (V) | L 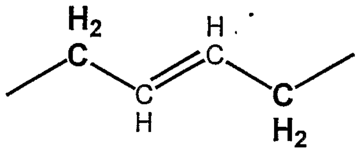 V 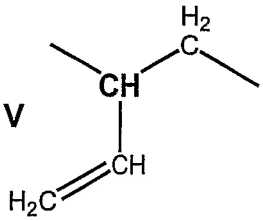 |
| $S_3$ (4,65-5,06 ppm) 2H (V) | V 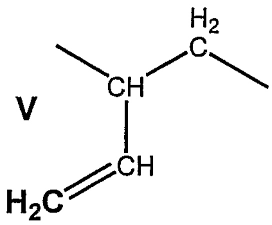 |
| $S_4$ (5,06-6,4 ppm) 2H (L) + 1H (V) | L 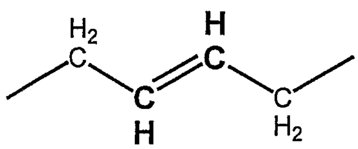 V 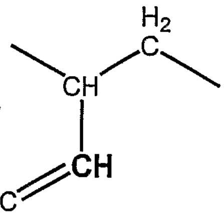 |

Pour accéder à la quantité totale d'α-oléfine dans le copolymère, il suffit d'utiliser théoriquement une des deux régions $S_0$ ou $S_1$ mais plusieurs cas peuvent se présenter.

Tout d'abord, quand les masses molaires des copolymères sont faibles, on trouve dans la région $S_0$-$S_1$ les raies caractéristiques des extrémités de chaînes saturées (butyles, octyles ou isobutyles), cette zone n'est donc plus caractéristique du taux d'insertion de l'α-oléfine. Dans ce cas, il faudra déterminer ce taux à partir de la RMN $^{13}C$ du copolymère.

Dans le cas des oléfines longues ou quand le taux d'a-oléfine n'est pas très élevé, la raie $S_0$ est trop faible pour être utilisée directement pour déterminer le taux d'α-oléfine et on utilisera plutôt la raie $S_1$ ou les deux raies ($S_0$ + $S_1$).

Enfin, dans certains cas, la résolution des surfaces $S_0$, $S_1$ et $S_2$ est mauvaise ce qui empêche de les intégrer

séparément et donc la détermination du taux d'insertion de l'α-oléfine se fera à partir de la somme de ces surfaces.

Différents cas de figure sont donc à distinguer. Chaque calcul est adapté à certaines des circonstances décrites précédemment et on peut recouper les résultats obtenus avec les différentes méthodes :

- 1er cas : utilisation de $S_0$ seul (masses molaires assez élevées)
- $S_0 = 3Ol$ et donc :

$$Ol = S_0/3 \text{ (quantité d'α-oléfine)}$$

- 2ème cas : utilisation de $S_1$ seul (cas des oléfines longues)
- $S_1 = (2n-3)Ol + 2V = (2n-3)Ol + S_3$ (n nombre de carbones de l'α-oléfine)

$$Ol = (S_1 - S_3) /(2n-3) \text{ (quantité d'α-oléfine)}$$

- 3ème cas : utilisation de $(S_0 + S_1)$ car $S_0$ n'est pas fiable (taux d'a-oléfine faible ou oléfines longues) ou $S_0$ et $S_1$ sont mal résolues.
- $(S_0 + S_1) = 3Ol + (2n-3)Ol + S_3 = 2nOl + S_3$

$$Ol = ((S_0 + S_1) - S_3) / 2n \text{ (quantité d'α-oléfine)}$$

- 4ème cas : utilisation de $(S_1 + S_2)$ car $S_1$ et $S_2$ sont mal résolues
- $(S_1 + S_2) = (2n-3)Ol + S_3 + 2S_4 - S_3/2 = (2n-3)Ol + 2S_4 + S_3/2$

$$Ol = ((S_1 + S_2) - 2S_4 - S_3/2) / (2n-3) \text{ (quantité d'α-oléfine)}$$

- 5ème cas : utilisation de $(S_0 + S_1 + S_2)$
- $(S_0 + S_1 + S_2) = 2nOl + S_3/2 + 2S_4$

$$Ol = ((S_0 + S_1 + S_2) - S_3/2 - 2S_4) / 2n \text{ (quantité d'α-oléfine)}$$

On déduira aisément la composition du copolymère à partir des quantités de butadiène et d'α-oléfine calculées ci-dessus.

2) Analyse d'un copolymère par RMN $^{13}C$ :

L'analyse des spectres de RMN $^{13}C$ des copolymères permet d'identifier plus précisément la microstructure du copolymère. A partir de cette analyse de microstructure par RMN (c'est-à-dire la quantification des différentes séquences d'enchaînements des unités « monomériques » à savoir diades ou triades du butadiène - en fait des butadiènes 1,2 / 1,4-cis et 1,4-trans- et de l'a-oléfine), on peut accéder à la composition du copolymère et au rapport cis / trans de l'insertion 1,4 du butadiène. Cette analyse est propre à chaque α-oléfine.

Nous avons choisi de détailler l'analyse du spectre RMN $^{13}C$ d'un copolymère hexène-butadiène en présentant l'ensemble de la technique d'attribution des différentes raies du spectre puis la quantification de la composition du copolymère. Pour toutes les autres α-oléfines, la présentation sera plus succincte mais la démarche suivie est identique au cas de l'hexène.

Nous nous sommes également contentés d'analyser la zone des carbones aliphatiques (haut champ) sans s'occuper de la zone des carbones alcéniques (bas champ) car elle n'apporte aucun renseignement supplémentaire.

Tous les copolymères étudiés dans ce chapitre ont des masses molaires relativement élevées ce qui nous permet d'éviter d'avoir un spectre de RMN $^{13}C$ perturbé par les pics correspondant aux extrémités de chaînes.

**2.1) Copolymère hexène-butadiène :**

On a obtenu par RMN $^{13}C$ le spectre d'un copolymère hexène-butadiène synthétisé au moyen du complexe organométallique de formule $[Me_2Si(C_5H_4)(C_{13}H_8)]NdCl(OC_4H_8)_x$ préparé à l'exemple 1 et d'un co-catalyseur constitué d'un mélange « BuLi / HDiBA », avec néodyme / BuLi / HDiBA = 1/10/10.

On reconnaît tout de suite à 27,83 (raie 4) et 33,10 ppm (raie 8) les raies caractéristiques d'un carbone ($CH_2$) situé en $\alpha$ d'une double liaison d'un butadiène inséré respectivement en 1,4-cis et 1,4-trans dans un enchaînement butadiène-butadiène (cas d'un polybutadiène). A 34,5 et 38,4 ppm sont également présentes, en faible proportion, les raies caractéristiques d'une unité butadiène insérée en 1,2 dans un polybutadiène.

En revanche, les signaux caractéristiques d'enchaînements hexène-hexène sont absents (pas de raie à 41,17 ppm ($CH_2$) caractéristique d'un enchaînement HH dans un polyhexène).

Les autres signaux non identifiés doivent donc correspondre à des enchaînements hexène-butadiène (HB) dans lesquels l'hexène est isolé (BHB). Or l'analysé des copolymères éthylène-butadiène obtenus avec ce catalyseur a montré que le butadiène s'insérait essentiellement en 1,4-trans. Nous pouvions nous attendre à retrouver plutôt ce type d'insertion dans les copolymères de butadiène et d'a-oléfines.

Nous avons donc recherché les raies caractéristiques d'un enchaînement 1,4-trans butadiène / hexène / 1,4-trans butadiène (THT). Pour cela nous avons pris comme point de départ les déplacements chimiques d'un enchaînement EHE d'un copolymère hexène-éthylène auquel nous avons appliqué les incréments d'influence d'une double liaison trans (T) qui ont été déterminés au laboratoire pour les copolymères éthylène-butadiène :
($\alpha$(trans) = +2,84 ; $\beta$(trans) = 0 ; $\gamma$(trans) = -0,5 ; $\delta$(trans) = -0,15 et $\varepsilon$ (trans) = -0,04 ppm).

Cette démarche est illustrée par le schéma A et le tableau 2 ci-après. Elle a permis d'identifier huit nouveaux signaux (raies 1, 2, 5, 6, 9-12 du spectre) caractéristiques de l'enchaînement THT (tableau 2).

Schéma A : Passage d'un enchaînement EHE à un enchaînement THT (notations employées).

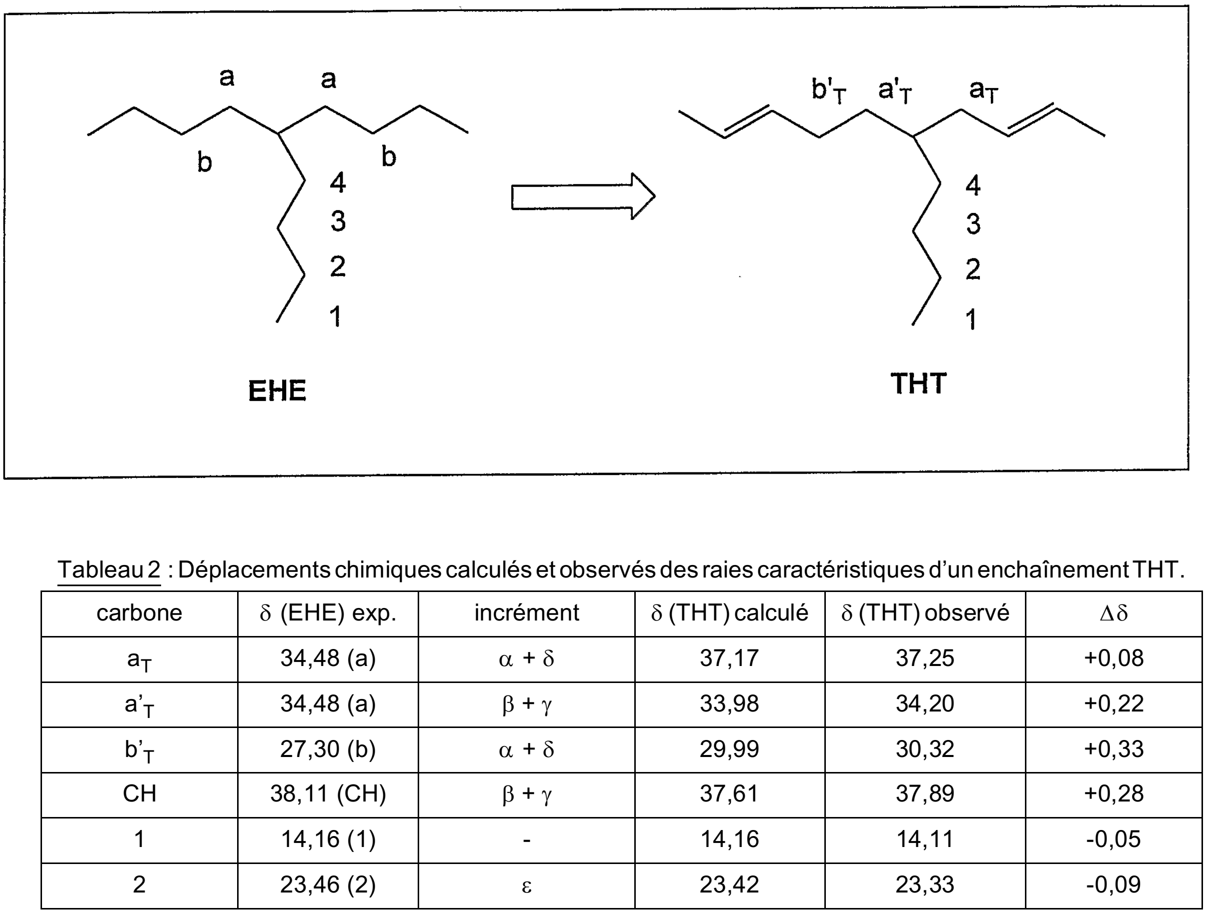

Tableau 2 : Déplacements chimiques calculés et observés des raies caractéristiques d'un enchaînement THT.

| carbone | $\delta$ (EHE) exp. | incrément | $\delta$ (THT) calculé | $\delta$ (THT) observé | $\Delta\delta$ |
|---|---|---|---|---|---|
| $a_T$ | 34,48 (a) | $\alpha + \delta$ | 37,17 | 37,25 | +0,08 |
| $a'_T$ | 34,48 (a) | $\beta + \gamma$ | 33,98 | 34,20 | +0,22 |
| $b'_T$ | 27,30 (b) | $\alpha + \delta$ | 29,99 | 30,32 | +0,33 |
| CH | 38,11 (CH) | $\beta + \gamma$ | 37,61 | 37,89 | +0,28 |
| 1 | 14,16 (1) | - | 14,16 | 14,11 | -0,05 |
| 2 | 23,46 (2) | $\varepsilon$ | 23,42 | 23,33 | -0,09 |

(suite)

| carbone | δ (EHE) exp. | incrément | δ (THT) calculé | δ (THT) observé | Δδ |
|---|---|---|---|---|---|
| 3 | 29,54 (3) | δ + ε | 29,35 | 29,41 | +0,06 |
| 4 | 34,09 (4) | δ + γ | 33,44 | 33,61 | +0,21 |

Tous les signaux principaux du spectre du copolymère hexène-butadiène ont été ainsi attribués. Deux autres raies moins intenses (raies 3 et 7) ont également été identifiées comme étant spécifiques d'un enchaînement BHB dans lequel le butadiène s'est inséré en 1,4-cis (C).

Dans ce cas, seuls les carbones a ou b' sont concernés par un changement de mode d'insertion du butadiène, les autres ont des déplacements identiques que la double liaison soit cis ou trans. Il est, en effet, communément admis que les incréments d'influence d'une double liaison cis et trans sont identiques sauf pour le carbone en α de celle-ci.

Les déplacements chimiques des carbones voisins d'une double liaison cis (C) ont été obtenus à partir de ceux déterminés pour THT en retranchant la différence observée entre un $CH_2$ en α d'une double liaison cis et trans dans un polybutadiène (Δδ = 5,15 ppm).

L'ensemble des déplacements chimiques des carbones d'un copolymère hexène-butadiène est présenté dans le tableau 3 ci-après (au vu du spectre).

Tableau 3 : Déplacements chimiques des carbones d'un copolymère hexène-butadiène : (voir schéma A ci-dessus pour les notations)

| n° raies | type de carbone | diades concernées | δ ppm |
|---|---|---|---|
| 12 | CH(H) | (T ou C)H | 37,89 |
| 11 | $a_T$ | HT | 37,25 |
| 10 | $a'_C + a'_T$ | (T ou C)H | 34,20 |
| 9 | H4 | - | 33,61 |
| 8 | $\alpha_T$ | 2T(T ou C) | 33,10 |
| 7 | $a_C$ | HC | 32,12 |
| 6 | $b'_T$ | TH | 30,32 |
| 5 | H3 | - | 29,41 |
| 4 | $\alpha_C$ | 2C(T ou C) | 27,83 |
| 3 | $b'_C$ | CH | 25,11 |
| 2 | H2 | - | 23,33 |
| 1 | H1 | - | 14,11 |

Pour quantifier les unités hexène, nous avons utilisé les carbones H3 (raie 5), H4 (raie 9) ou a'(raie 10) dont les intégrales sont plus fiables que les autres (H1, H2 : pas complètement relaxés car en bout de ramification ; CH : NOE différent...).

Et donc :

$$H = A_5 = A_9 = A_{10} \text{ (ou la moyenne des trois)}$$

Pour le butadiène, il faut distinguer les insertions 1,4-cis (C) et 1,4-trans (T).

La comptabilisation de tous les carbones en α des doubles liaisons donne :

- 2T = 2 T(C ou T) + TH = 2 T(C ou T) + $\overrightarrow{TH}$ + $\overrightarrow{HT}$ (carbones en α de T dans les diades butadiène-butadiène et butadiène-hexène),

- 2C = 2 C(C ou T) + CH = 2 C(C ou T) + $\overrightarrow{CH}$ + $\overrightarrow{HC}$ (carbones en α de C).

D'après l'attribution des raies (voir tableau 3 ci-dessus), on a :

- 2 T(C ou T) = $A_8$, $\overrightarrow{TH} + \overrightarrow{HT}$ = "$b'_T + a_T$" = $A_6 + A_{11}$
- 2 C(C ou T) = $A_4$, $\overrightarrow{CH} + \overrightarrow{HC}$ = "$b'_C + a_C$" = $A_3 + A_7$

et donc,

$$2T = A_8 + A_6 + A_{11} \text{ et } 2C = A_4 + A_3 + A_7$$
$$\text{et } 2(T + C) = 2\,L = A_3 + A_4 + A_6 + A_7 + A_8 + A_{11}$$

Nous pouvons donc déterminer le taux d'insertion d'hexène du copolymère ainsi que des caractéristiques de la stéréochimie d'insertion du butadiène :

- taux d'hexène :

$H/(H + L) = 2A_{10} / (2A_{10} + A_3 + A_4 + A_6 + A_7 + A_8 + A_{11})$ (L = 1,4 butadiène) que l'on doit corriger en tenant compte du taux d'insertion $\tau$ du butadiène en 1,2 déterminé à partir de la RMN $^1$H et qui devient :

$$H/(H + B) = 2A_{10} / (2A_{10} + (1/(1-\tau))(A_3 + A_4 + A_6 + A_7 + A_8 + A_{11}))$$

$$(= H/(H + L + V) = H/(H + (1/(1-\tau))L))$$

- insertion 1,4 du butadiène :

- rapport cis / cis + trans dans le copolymère = $(A_4 + A_3 + A_7) / (A_3 + A_4 + A_6 + A_7 + A_8 + A_{11})$
- rapport cis / cis + trans dans les diades butadiène-butadiène = $A_4 / (A_4 + A_8)$
- rapport cis / cis + trans dans les diades butadiène-hexène = $(A_3 + A_7) / (A_3 + A_6 + A_7 + A_{11})$

**2.2) Copolymère propylène-butadiène** :

On a obtenu par RMN $^{13}$C le spectre d'un copolymère propylène-butadiène synthétisé au moyen du complexe organométallique de formule $[Me_2Si(C_5H_4)(C_{13}H_8)]NdCl(OC_4H_8)_x$ préparé à l'exemple 1 et d'un co-catalyseur constitué d'un mélange « BuLi / HDiBA », avec néodyme / BuLi / HDiBA = 1/10/10.

Pour l'attribution des différentes raies (voir tableau 4 ci-après), nous avons procédé comme précédemment. Nous n'avons observé aucun enchaînement d'unités propylène : celles-ci sont toujours isolées entre deux unités butadiènes.

Les notations sont illustrées au schéma B ci-après.

Tableau 4 :

| n° raies | type de carbone | $\delta$ ppm | diades concernées |
|---|---|---|---|
| 7 | $a_T$ | 40,29 | P<u>T</u> |
| 6 | $a'_C + a'_T$ | 36,95 | (T ou C)<u>P</u> |
| absente | $a_C$ | 35,07 | P<u>C</u> |

(suite)

| n° raies | type de carbone | δ ppm | diades concernées |
|---|---|---|---|
| 5 | $\alpha_T$<br>méthine(P) | 33,06<br>33,00 | 2T(T ou C)<br>(T ou C)P(T ou C) |
| 4 | $b'_T$ | 30,45 | TP |
| 3 | $\alpha_C$ | 27,80 | 2C(T ou C) |
| 2 | $b'_C$ | 25,23 | CP |
| 1 | P1 | 19,57 | - |

Schéma B : Notations pour un enchaînement BPB d'un copolymère propylène-butadiène.

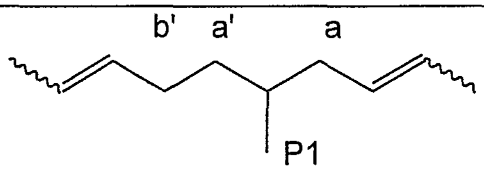

A partir de ces attributions, nous avons déterminé la composition et la microstructure du copolymère :

- **P = $A_6$,**
- 2T = 2 T(C ou T) + TP et 2C = 2 C(C ou T) + CP

(TP et CP sont des diades non orientées), soit **2(T+C)** = 2 T(C ou T) + 2 C(C ou T) + (TP + CP) = **($A_5$ - $A_6$) + $A_3$ + 2$A_6$**

Et donc, le taux de propylène est :

P/(P+L) = 2$A_6$ / ($A_3$ + $A_5$ + 3$A_6$) (L = 1,4 butadiène) que l'on doit corriger en tenant compte du taux d'insertion τ du butadiène en 1,2 déterminé à partir de la RMN $^1$H et qui devient :

$$P/(P + B) = 2A_6 / (2A_6 + (1/(1-\tau))(A_3 + A_5 + A_6))$$

Concernant l'insertion du butadiène, on retrouve aisément :

- rapport cis / cis + trans dans les diades butadiène-butadiène = $A_3 / (A_3 + A_5 + A_6)$
- rapport cis / cis + trans dans les diades butadiène-propylène = $A_2 / (A_2 + A_4)$

**2.3) Copolymère butène-butadiène** :

On a obtenu par RMN $^{13}$C le spectre d'un copolymère butène-butadiène synthétisé au moyen du complexe organométallique de formule $[Me_2Si(C_5H_4)(C_{13}H_8)]NdCl(OC_4H_8)_x$ préparé à l'exemple 1 et d'un co-catalyseur constitué d'un mélange « BuLi / HDiBA », avec néodyme / BuLi / HDiBA = 1/10/10.

L'attribution des raies de ce spectre est décrite dans le tableau 5 ci-après. Le butène est pratiquement toujours isolé entre deux unités butadiène insérées en 1,4-trans (TBT). Les notations employées sont identiques à celles utilisés pour le propylène à l'exception des carbones B1 et B2 qui correspondent au groupe alkyle latéral.

Tableau 5 :

| n° raies | type de carbone | δ ppm | diades concernées |
|---|---|---|---|
| 9 | méthine(B) | 39,45 | (T ou C)B(T ou C) |
| 8 | $a_T$ | 36,76 | BT |
| 7 | $a'_C + a'_T$ | 33,64 | (T ou C)B |
| 6 | $\alpha_T$ | 32,96 | 2T(T ou C) |
| absente | $a_C$ | 31,54 | *BC* |
| 5 | $b'_T$ | 30,31 | TB |
| 4 | ? (non attribuée) | 29,46 | ? |
| 3 | $\alpha_C$ | 27,81 | 2C(T ou C) |
| 2 | B2 | 26,27 | - |
| quasi absente | $b'_C$ | 25,11 | CB |
| 1 | B1 | 11,09 | - |

A partir de ces attributions, nous avons déterminé la composition et la microstructure du copolymère :

- **$B = A_5 = A_7 = A_8$** (ou la moyenne des trois)
- $2T = 2\ T(C\ ou\ T) + TB = A_6 + A_5 + A_8$ et $2C = 2\ C(C\ ou\ T) + CB = A_3$
  soit **$2(T+C) = A_3 + A_6 + A_5 + A_8$**

Et donc, le taux de butène est :
$B/(B+L) = 2A_7 / (2A_7 + A_3 + A_6 + A_5 + A_8)$ (L = 1,4 butadiène) que l'on doit corriger en tenant compte du taux d'insertion $\tau$ du butadiène en 1,2 déterminé par RMN $^1H$ et qui devient :

$$\mathbf{B/(B + Bu) = 2A_7 / (2A_7 + (1/(1-\tau))( A_3 + A_6 + A_5 + A_8))}$$

Pour l'insertion du butadiène, on retrouve :

rapport cis / cis + trans dans les diades butadiène-butadiène **$= A_3 / (A_3 + A_6)$**
pas de 1,4-cis dans les diades butadiène-butène

**2.4) Copolymère octène-butadiène** :

On a obtenu par RMN $^{13}C$ le spectre d'un copolymère octène-butadiène synthétisé au moyen dudit complexe organométallique de formule $[Me_2Si(C_5H_4)(C_{13}H_8)]NdCl(OC_4H_8)_x$ préparé à l'exemple 1 et d'un co-catalyseur constitué d'un mélange « BuLi / HDiBA », avec néodyme / BuLi / HDiBA = 1/10/10.

L'attribution des raies de ce spectre est décrite dans le tableau 6 ci-après. L'octène est toujours isolé entre deux unités butadiène insérées en 1,4-trans (TOT). Le schéma C ci-après illustre les notations employées.

Schéma C : notations pour un enchaînement TOT d'un copolymère octène-butadiène :

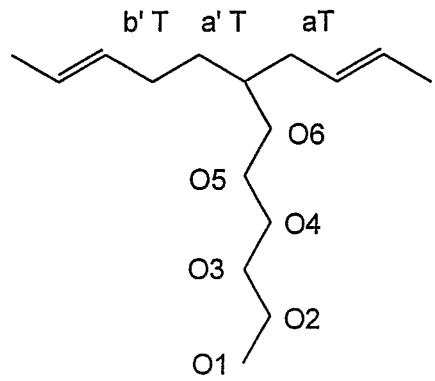

Tableau 6 :

| n° raies | type de carbone | δ ppm | diades concernées |
|---|---|---|---|
| 8 | Méthine(O) | 37,97 | (T ou C)O |
| 7 | $a_T$ | 37,26 | OT |
| 6 | $a'_C + a'_T$ | 34,20 | (T ou C)O |
| 5 | O6 | 34,00 | - |
| 4 | $\alpha_T$ | 33,03 | 2T(T ou C) |
| - | O3 | 32,30 | - |
| absente | $a_C$ | 32,13 | *OC* |
| - | O4 | 30,40 | - |
| 3 | $b'_T$ | 30,04 | TO |
| 2 | $\alpha_C$ | 27,83 | 2C(T ou C) |
| 1 | O5 | 27,13 | - |
| absente | $b'_C$ | 24,79 | CO |
| - | O2 | 22,94 | - |
| - | O1 | 14,09 | - |

A partir de ces attributions, on détermine la composition et la microstructure du polymère :

- **2O = $A_1 + A_5$**
- 2T = 2 T(C ou T) + TO = $A_4 + A_3 + A_7$ et 2C = 2 C(C ou T) + CO = $A_2$
  soit **2(T+C) = $A_2 + A_4 + A_3 + A_7$**

Et donc, le taux d'octène est :
O/(O+L) = $(A_1 + A_5) / ((A_1 + A_5) + A_2 + A_4 + A_3 + A_7)$ (L = 1,4 butadiène) que l'on corrige en tenant compte du taux d'insertion τ du butadiène en 1,2 déterminé par RMN $^1H$ et qui devient :

$$O/(O + B) = (A_1 + A_5) / ((A_1 + A_5) + (1/(1-\tau))( A_2 + A_4 + A_3 + A_7))$$

Pour l'insertion du butadiène, on retrouve :

rapport cis / cis + trans dans les diades butadiène-butadiène = $A_2$ / ($A_2$ + $A_4$)
pas de 1,4-cis dans les diades butadiène-octène

**2.5) Copolymère hexadécène-butadiène :**

On a obtenu par RMN $^{13}C$ le spectre d'un copolymère hexadécène-butadiène synthétisé au moyen dudit complexe organométallique de formule $[Me_2Si(C_5H_4)(C_{13}H_8)]NdCl(OC_4H_8)_x$ préparé à l'exemple 1 et d'un co-catalyseur constitué d'un mélange « BuLi / HDiBA », avec néodyme / BuLi / HDiBA = 1/10/10.
L'attribution des raies de ce spectre est décrite dans le tableau 7 ci-après.

Tableau 7 :

| n° raies | type de carbone | δ ppm | diades concernées |
|---|---|---|---|
| 8 | Méthine(H) | 38,00 | (T ou C)H |
| 7 | $a_T$ | 37,26 | HT |
| 6 | $a'_C + a'_T$ | 34,20 | (T ou C)H |
| 5 | H14 | 34,02 | |
| 4 | $\alpha_T$ | 33,03 | 2T(T ou C) |
| - | H3 | 32,25 | |
| quasi absente | $a_C$ | 32,13 | HC |
| 3 | H12 | 30,44-30,34 | - |
| | H5-H11 | 30,04 | - |
| | $b'_T$ | 29,98 | TH |
| | H4 | 29,65 | - |
| 2 | $\alpha_C$ | 27,83 | 2C(T ou C) |
| 1 | H13 | 27,20 | - |
| absente | $b'_C$ | 24,79 | CH |
| - | H2 | 22,94 | |
| - | H1 | 14,09 | |

Comme avec l'octène, l'hexadécène est toujours isolé entre deux unités butadiène insérées en 1,4-trans (THT). A partir des différentes attributions, on déduit :

- **2H = $A_1$ + $A_5$**
- 2T = 2 T(C ou T) + TH = $A_4$ + 2$A_6$ et 2C = 2 C(C ou T) + CH = $A_2$

soit **2(T+C) = $A_2$ + $A_4$ + 2$A_6$**
Et donc, le taux d'hexadécène est :
H/(H+L) = ($A_1$ + $A_5$) / (($A_1$ + $A_5$) + $A_2$ + $A_4$ + 2$A_6$) (L = 1,4 butadiène) que l'on doit corriger en tenant compte du taux d'insertion τ du butadiène en 1,2 déterminé par RMN $^1H$ et qui devient :

$$H/(H + B) = (A_1 + A_5) / ((A_1 + A_5) + (1/(1-\tau))( A_2 + A_4 + 2A_6))$$

Pour l'insertion du butadiène, on retrouve :

| |
|---|
| rapport cis / cis +trans dans les diades butadiène-butadiène **= $A_2$ / ($A_2$ + $A_4$)**<br>pas de 1,4-cis dans les diades butadiène-hexadécène |

**Revendications**

1. Système catalytique utilisable pour l'obtention d'un copolymère d'un diène conjugué et d'au moins une mono-oléfine telle qu'une alpha-oléfine et/ou de l'éthylène, **caractérisé en ce qu'**il comprend :

   (i) un complexe organométallique représenté par la formule générique suivante :

   (1) $\{[P(Cp)(Fl)Ln(X)(L_x)\}_p$

   où Ln représente un atome de lanthanide de numéro atomique allant de 57 à 71, auquel est reliée une molécule de ligand comprenant des groupes cyclopentadiényle Cp et fluorényle Fl qui sont chacun indépendamment substitués ou non et reliés entre eux par un pont P de formule $MR^1R^2$, où M est un élément de la colonne IVA de la classification périodique de Mendeleev et où $R^1$ et $R^2$, identiques ou différents, représentent chacun des groupes alkyle ayant de 1 à 20 atomes de carbone ou bien des groupes cycloalkyle ou phényle ayant de 6 à 20 atomes de carbone,
   où X représente un atome d'halogène pouvant être le chlore, le fluor, le brome ou l'iode,
   où L comprend une molécule complexante optionnelle, telle qu'un éther, et éventuellement une molécule sensiblement moins complexante, telle que du toluène,
   où p est un entier naturel égal ou supérieur à 1 et x est égal ou supérieur à 0, et

   (ii) un co-catalyseur appartenant au groupe constitué par les alkyl magnésiums, les alkyl lithiums, les alkyl aluminiums, les réactifs de Grignard et les mélanges de ces constituants.

2. Système catalytique selon la revendication 1, **caractérisé en ce que** ledit complexe organométallique est représenté par la formule suivante :

   (1bis) 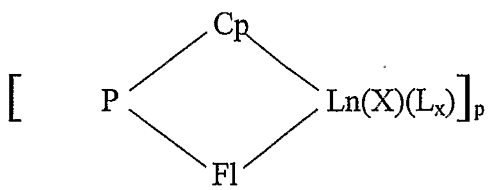

3. Système catalytique selon la revendication 2, **caractérisé en ce que** ledit complexe organométallique est tel que p est égal à 2, étant représenté par la formule suivante :

   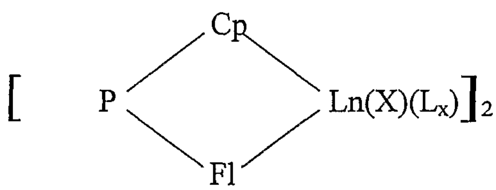

4. Système catalytique selon une des revendications 1 à 3, **caractérisé en ce que** lesdits groupes cyclopentadiényle Cp et fluorényle Fl sont tous deux non substitués, répondant respectivement aux formules $C_5H_4$ et $C_{13}H_8$.

5. Système catalytique selon une des revendications 1 à 4, **caractérisé en ce que** ledit pont P répond à la formule $SiR^1R^2$.

6. Système catalytique selon la revendication 5, **caractérisé en ce que** $R^1$ et $R^2$ sont chacun indépendamment des

groupes alkyle, tels que des groupes méthyle.

**7.** Système catalytique selon une des revendications précédentes, **caractérisé en ce que** ledit complexe organométallique est tel que le lanthanide Ln est le néodyme.

**8.** Système catalytique selon une des revendications précédentes, **caractérisé en ce que** ledit co-catalyseur est un alkyl magnésium tel que le butyloctyl magnésium, ou un mélange d'un alkyl aluminium tel que l'hydrure de diisobutyl aluminium et d'un alkyl lithium tel que le butyl lithium qui sont présents en quantités sensiblement stoechiométriques dans ledit mélange.

**9.** Système catalytique selon une des revendications précédentes, **caractérisé en ce que** ledit rapport molaire (co-catalyseur / complexe organométallique) est inférieur ou égal à 5, ledit système catalytique étant ainsi utilisable pour que ledit copolymère obtenu présente une masse moléculaire moyenne en nombre Mn supérieure à 30 000 g/mol telle que mesurée selon la méthode décrite dans l'invention.

**10.** Système catalytique selon la revendication 9, **caractérisé en ce que** ledit rapport molaire (co-catalyseur / complexe organométallique) est inférieur ou égal à 2, ledit système catalytique étant ainsi utilisable pour que ledit copolymère obtenu présente une masse moléculaire moyenne en nombre Mn supérieure à 60 000 g/mol telle que mesurée selon la méthode décrite dans l'invention.

**11.** Procédé de préparation d'un système catalytique selon une des revendications précédentes, **caractérisé en ce qu'**il comprend :

a) la préparation dudit complexe organométallique comprenant :

(i) la réaction avec un alkyl lithium d'une molécule hydrogénée de ligand, représentée par la formule (2) suivante, pour obtenir un sel de lithium répondant à la formule (3) suivante :

(2) 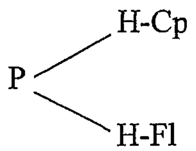 (3) 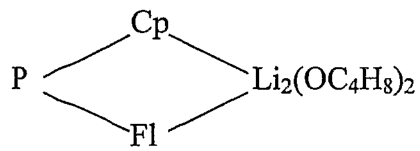

(ii) la réaction dans un solvant complexant dudit sel avec un trihalogénure anhydre dudit lanthanide de formule $LnX_3$ où X est ledit halogène,
(iii) l'évaporation dudit solvant complexant, puis l'extraction du produit obtenu en (ii) dans un solvant sensiblement moins complexant que le solvant utilisé en (ii), puis, éventuellement,
(iv) la cristallisation du produit extrait en (iii) pour obtenir ledit complexe organométallique totalement exempt dudit solvant complexant, puis

b) l'adjonction dudit co-catalyseur audit complexe organométallique préparé en a).

**12.** Procédé de préparation d'un système catalytique selon la revendication 11, **caractérisé en ce que** l'une au moins des conditions suivantes est vérifiée :

- ledit alkyl lithium utilisé en a) (i) est le butyl lithium, et/ou
- ledit solvant complexant utilisé en a) (ii) est le tétrahydrofuranne, et/ou
- ledit solvant sensiblement moins complexant utilisé en a) (iii) est l'heptane ou le toluène.

**13.** Procédé de préparation d'un système catalytique selon la revendication 11 ou 12, **caractérisé en ce que** lesdits groupes cyclopentadiényle Cp et fluorényle Fl sont tous deux non substitués, répondant respectivement aux formules $C_5H_4$ et $C_{13}H_8$.

**14.** Procédé de préparation d'un système catalytique selon une des revendications 11 à 13, **caractérisé en ce que** ledit pont P répond à la formule $SiR^1R^2$.

**15.** Procédé de préparation d'un système catalytique selon la revendication 14, **caractérisé en ce que** $R^1$ et $R^2$ sont

chacun indépendamment des groupes alkyle, tels que des groupes méthyle.

16. Procédé de préparation d'un système catalytique selon une des revendications 11 à 15, en ce que ledit lanthanide Ln est le néodyme.

17. Procédé de préparation d'un système catalytique selon une des revendications 11 à 16, **caractérisé en ce que** ledit co-catalyseur est un alkyl magnésium tel que le butyloctyl magnésium, ou un mélange d'un alkyl aluminium tel que l'hydrure de diisobutyl aluminium, et d'un alkyl lithium tel que le butyl lithium, présents en quantités sensiblement stoechiométriques dans ledit mélange.

18. Procédé de préparation d'un système catalytique selon une des revendications 11 à 17, **caractérisé en ce que** le rapport molaire (nombre de moles dudit co-catalyseur / nombre de moles dudit complexe organométallique) est inférieur ou égal à 5, ledit système catalytique étant ainsi utilisable pour que ledit copolymère obtenu présente une masse moléculaire moyenne en nombre Mn supérieure à 30 000 g/mol telle que mesurée selon la méthode décrite dans l'invention.

19. Procédé de préparation d'un système catalytique selon la revendication 18, **caractérisé en ce que** ledit rapport molaire (co-catalyseur / complexe organométallique) est inférieur ou égal à 2, ledit système catalytique étant ainsi utilisable pour que ledit copolymère obtenu présente une masse moléculaire moyenne en nombre Mn supérieure à 60 000 g/mol telle que mesurée selon la méthode décrite dans l'invention.

20. Procédé de préparation d'un copolymère d'au moins un diène conjugué et d'au moins une mono-oléfine, comprenant la réaction d'un système catalytique dans un solvant hydrocarboné inerte en présence dudit ou desdits diène(s) conjugué(s) et de ladite ou desdites mono-oléfine(s), **caractérisé en ce que** ledit système catalytique est tel que défini à l'une des revendications 1 à 10.

21. Procédé de préparation d'un copolymère selon la revendication 20, **caractérisé en ce que** ledit copolymère comporte des unités issues d'un diène conjugué, tel que le butadiène ou l'isoprène, et des unités issues d'au moins une mono-oléfine appartenant au groupe constitué par l'éthylène, les alpha-oléfines et les composés vinylaromatiques.

22. Procédé de préparation d'un copolymère selon la revendication 21, **caractérisé en ce que** ledit copolymère comporte, selon un taux molaire égal ou supérieur à 10 %, des unités issues d'une alpha-oléfine ayant de 3 à 18 atomes de carbone, le taux molaire étant telle que mesuré selon la méthode décrite dans l'invention.

23. Procédé de préparation d'un copolymère selon la revendication 21, **caractérisé en ce que** ledit copolymère comporte des unités issues dudit diène conjugué, des unités issues de l'éthylène et, selon un taux molaire égal ou supérieur à 10 %, des unités issues d'une alpha-oléfine ayant de 3 à 18 atomes de carbone, le taux molaire étant mesuré selon la méthode décrite dans l'invention.

24. Procédé de préparation d'un copolymère selon la revendication 22 ou 23, **caractérisé en ce que** les unités issues dudit diène conjugué sont présentes dans ledit copolymère selon un taux molaire supérieur à 40 %, le taux molaire étant mesuré selon la méthode décrite dans l'invention.

25. Procédé de préparation d'un copolymère selon une des revendications 20 à 24, **caractérisé en ce que** les unités issues dudit ou desdits diène(s) conjugué(s) présentent un taux d'enchaînements trans-1,4 supérieur à 70% mesuré selon la méthode décrite dans l'invention.

26. Procédé de préparation d'un copolymère selon une des revendications 20 à 25, **caractérisé en ce que** ledit rapport molaire (co-catalyseur / complexe organométallique) est inférieur ou égal à 5, pour que la masse moléculaire moyenne en nombre dudit copolymère soit supérieure à 30000 g/mol, telle que mesuré selon la méthode décrite dans l'invention.

27. Procédé de préparation d'un copolymère selon la revendication 26, **caractérisé en ce que** ledit rapport molaire (co-catalyseur / complexe organométallique) est inférieur ou égal à 2, pour que ledit copolymère présente une masse moléculaire moyenne en nombre supérieure à 60 000 g/mol telle que mesurée selon la méthode décrite dans l'invention.

28. Copolymère d'au moins un diène conjugué et d'au moins une alpha-oléfine ayant de 3 à 18 atomes de carbone,

ledit copolymère étant susceptible d'être obtenu par un procédé selon une des revendications 20 à 27, **caractérisé en ce qu'**il satisfait à la fois aux conditions suivantes :

- la masse moléculaire moyenne en nombre dudit copolymère est supérieure à 60 000 g/mol,
- ledit copolymère comprend des unités issues dudit ou desdits diène(s) conjugué(s) selon un taux molaire supérieur à 40 % et inférieur ou égal à 90 %, et des unités issues de ladite ou desdites alpha-oléfine(s) selon un taux molaire inférieur à 60 % et égal ou supérieur à 10 %,
- lesdites unités issues dudit ou desdits diène(s) conjugué(s) présentent un taux d'enchaînements trans-1,4 supérieur à 70 %, et
- ledit copolymère est dépourvu d'unité cyclique,

la masse moléculaire moyenne en nombre, les taux molaires et le taux d'enchaînements trans-1,4 étant mesurés selon les méthodes décrites dans l'invention.

**29.** Copolymère d'au moins un diène conjugué et d'au moins une alpha-oléfine selon la revendication 28, **caractérisé en ce qu'**il comprend les unités issues dudit ou desdits diène(s) conjugué(s) selon un taux molaire supérieur à 60 % et inférieur ou égal à 80 %, et les unités issues de ladite ou desdites alpha-oléfine(s) selon un taux molaire inférieur à 40 % et égal ou supérieur à 20 %, les taux molaires étant mesurés selon les méthodes décrites dans l'invention.

**30.** Copolymère d'au moins un diène conjugué et d'au moins une alpha-oléfine selon la revendication 28 ou 29, **caractérisé en ce qu'**il est constitué d'un copolymère d'un diène conjugué, tel que le butadiène ou l'isoprène, et d'une alpha-oléfine ayant de 3 à 18 atomes de carbone, telle que le propène, le butène, l'hexène ou l'octène.

**31.** Copolymère d'au moins un diène conjugué et d'au moins une alpha-oléfine selon la revendication 28, **caractérisé en ce qu'**il est constitué d'un terpolymère d'un diène conjugué, tel que le butadiène ou l'isoprène, de l'éthylène et d'une alpha-oléfine ayant de 3 à 18 atomes de carbone, telle que le propène, le butène, l'hexène ou l'octène.

**32.** Copolymère d'au moins un diène conjugué et d'au moins une alpha-oléfine selon une des revendications 28 à 31, **caractérisé en ce que** chaque unité issue de ladite ou desdites alpha-oléfines est insérée dans la chaîne dudit copolymère entre deux unités issues dudit ou de chaque diène conjugué, de telle sorte que l'ensemble des unités dudit copolymère présente une répartition régulière de type pratiquement alternée.

## Patentansprüche

**1.** Katalytisches System, das zum Erhalt eines Copolymers aus einem konjugierten Dien und mindestens einem Monoolefin wie einem alpha-Olefin und/oder Ethylen verwendbar ist, **dadurch gekennzeichnet, dass** es Folgendes umfasst:

(i) einen metallorganischen Komplex, der durch die folgende allgemeine Formel wiedergegeben wird:

(1) $\{[P(Cp)(Fl)Ln(X)(L_x)\}_p$

wobei Ln für ein Lanthanidmetall mit einer Ordnungszahl von 57 bis 71 steht, das an ein Ligandenmolekül gebunden ist, das eine Cyclopentadienylgruppe Cp und eine Fluorenylgruppe Fl umfasst, die jeweils unabhängig gegebenenfalls substituiert sind und über eine Brücke P der Formel $MR^1R^2$, wobei M für ein Element der Spalte IVA des Periodensystems von Mendelejew steht und $R^1$ und $R^2$ gleich oder verschieden sind und jeweils für Alkylgruppen mit 1 bis 20 Kohlenstoffatomen oder auch Cycloalkyl- oder Phenylgruppen mit 6 bis 20 Kohlenstoffatomen stehen, miteinander verbunden sind,
wobei X für ein Halogen, bei dem es sich um Chlor, Fluor, Brom oder Iod handeln kann, steht,
wobei L ein fakultatives komplexierendes Molekül, wie einen Ether, und gegebenenfalls ein deutlich schwächer komplexierendes Molekül, wie Toluol, umfasst,
wobei p für eine natürliche Zahl größer oder gleich 1 steht und x größer oder gleich 0 ist, und

(ii) einen Cokatalysator aus der aus Alkylmagnesiumverbindungen, Alkyllithiumverbindungen, Alkylaluminiumverbindungen, Grignard-Reagenzien und Mischungen dieser Bestandteile bestehenden Gruppe.

**2.** Katalytisches System nach Anspruch 1, **dadurch gekennzeichnet, dass** der metallorganische Komplex durch die folgende Formel wiedergegeben wird:

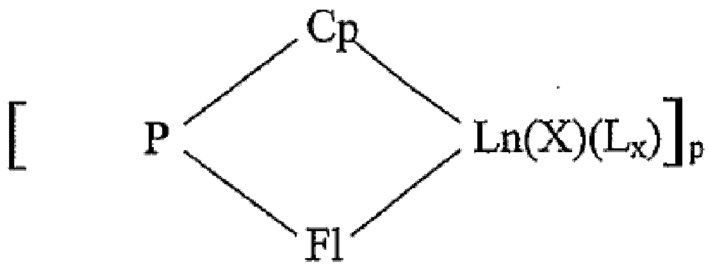

(1a)

**3.** Katalytisches System nach Anspruch 2, **dadurch gekennzeichnet, dass** der metallorganische Komplex so beschaffen ist, dass p gleich 2 ist und durch die folgende Formel wiedergegeben wird:

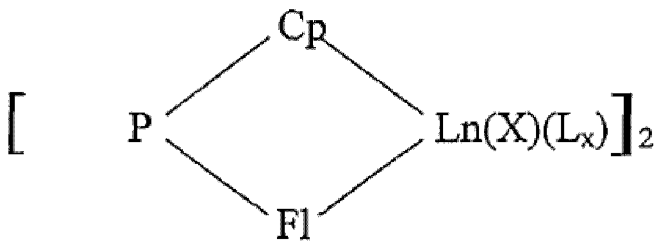

**4.** Katalytisches System nach einem der Ansprüche 1 bis 3, **dadurch gekennzeichnet, dass** die Cyclopentadienylgruppe Cp und die Fluorenylgruppe Fl beide unsubstituiert sind und den Formeln $C_5H_4$ bzw. $C_{13}H_8$ entsprechen.

**5.** Katalytisches System nach einem der Ansprüche 1 bis 4, **dadurch gekennzeichnet, dass** die Brücke P der Formel $SiR^1R^2$ entspricht.

**6.** Katalytisches System nach Anspruch 5, **dadurch gekennzeichnet, dass** $R^1$ und $R^2$ jeweils unabhängig für Alkylgruppen, wie Methylgruppen, stehen.

**7.** Katalytisches System nach einem der vorhergehenden Ansprüche, **dadurch gekennzeichnet, dass** der metallorganische Komplex so beschaffen ist, dass es sich bei dem Lanthanid Ln um Neodym handelt.

**8.** Katalytisches System nach einem der vorhergehenden Ansprüche, **dadurch gekennzeichnet, dass** es sich bei dem Cokatalysator um ein Alkylmagnesium wie Butyloctylmagnesium oder eine Mischung eines Alkylmagnesiums wie Diisobutylaluminiumhydrid und eines Alkyllithiums wie Butyllithium, die in der Mischung in weitgehend stöchiometrischen Mengen vorliegen, handelt.

**9.** Katalytisches System nach einem der vorhergehenden Ansprüche, **dadurch gekennzeichnet, dass** das Molverhältnis (Cokatalysator/metallorganischer Komplex) kleiner oder gleich 5 ist, wobei das katalytische System somit dafür verwendbar ist, dass das erhaltene Copolymer ein zahlenmittleres Molekulargewicht Mn von mehr als 30.000 g/mol gemäß Messung nach der in der Erfindung beschriebenen Methode aufweist.

**10.** Katalytisches System nach Anspruch 9, **dadurch gekennzeichnet, dass** das Molverhältnis (Cokatalysator/metallorganischer Komplex) kleiner oder gleich 2 ist, wobei das katalytische System somit dafür verwendbar ist, dass das erhaltene Copolymer ein zahlenmittleres Molekulargewicht Mn von mehr als 60.000 g/mol gemäß Messung nach der in der Erfindung beschriebenen Methode aufweist.

**11.** Verfahren zur Herstellung eines katalytischen Systems nach einem der vorhergehenden Ansprüche, **dadurch gekennzeichnet, dass** es Folgendes umfasst:

a) die Herstellung des metallorganischen Komplexes, umfassend:

(i) Umsetzen eines hydrierten Ligandenmoleküls, das durch die folgende Formel (2) wiedergegeben wird,

mit einem Alkyllithium zu einem Lithiumsalz, das der folgenden Formel (3) entspricht:

(2) 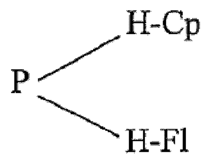 (3) 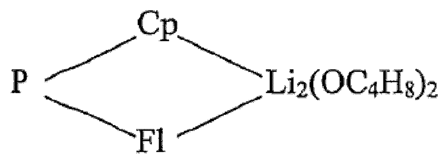

(ii) Umsetzen des Salzes mit einem wasserfreien Trihalogenid des Lanthanids der Formel $LnX_3$, wobei X für das Halogen steht, in einem komplexierenden Lösungsmittel,
(iii) Verdampfen des komplexierenden Lösungsmittels und ein Extrahieren des in (ii) erhaltenen Produkts in ein Lösungsmittel, das deutlich schwächer komplexierend ist als das in (ii) verwendete Lösungsmittel, dann gegebenenfalls
(iv) Kristallisieren des in (iii) extrahierten Produkts zum Erhalt des metallorganischen Komplexes, der vollkommen frei von dem komplexierenden Lösungsmittel ist, dann

b) Zugeben des Cokatalysators für den in a) hergestellten metallorganischen Komplex.

**12.** Verfahren zur Herstellung eines katalytischen Systems nach Anspruch 11, **dadurch gekennzeichnet, dass** mindestens eine der folgenden Bedingungen erfüllt ist:

- bei dem in a) (i) verwendeten Alkyllithium handelt es sich um Butyllithium, und/oder
- bei dem in a) (ii) verwendeten komplexierenden Lösungsmittel handelt es sich um Tetrahydrofuran, und/oder
- bei dem in a) (iii) verwendeten deutlich schwächer komplexierenden Lösungsmittel handelt es sich um Heptan oder Toluol.

**13.** Verfahren zur Herstellung eines katalytischen Systems nach Anspruch 11 oder 12, **dadurch gekennzeichnet, dass** die Cyclopentadienylgruppe Cp und die Fluorenylgruppe Fl beide unsubstituiert sind und den Formeln $C_5H_4$ bzw. $C_{13}H_8$ entsprechen.

**14.** Verfahren zur Herstellung eines katalytischen Systems nach einem der Ansprüche 11 bis 13, **dadurch gekennzeichnet, dass** die Brücke P der Formel $SiR^1R^2$ entspricht.

**15.** Verfahren zur Herstellung eines katalytischen Systems nach Anspruch 14, **dadurch gekennzeichnet, dass** $R^1$ und $R^2$ jeweils unabhängig für Alkylgruppen, wie Methylgruppen, stehen.

**16.** Verfahren zur Herstellung eines katalytischen Systems nach einem der Ansprüche 11 bis 15, **dadurch gekennzeichnet, dass** der metallorganische Komplex so beschaffen ist, dass es sich bei dem Lanthanid Ln um Neodym handelt.

**17.** Verfahren zur Herstellung eines katalytischen Systems nach einem der Ansprüche 11 bis 16, **dadurch gekennzeichnet, dass** es sich bei dem Cokatalysator um ein Alkylmagnesium wie Butyloctylmagnesium oder eine Mischung eines Alkylmagnesiums wie Diisobutylaluminiumhydrid und eines Alkyllithiums wie Butyllithium, die in der Mischung in weitgehend stöchiometrischen Mengen vorliegen, handelt.

**18.** Verfahren zur Herstellung eines katalytischen Systems nach einem der Ansprüche 11 bis 17, **dadurch gekennzeichnet, dass** das Molverhältnis (Cokatalysator/metallorganischer Komplex) kleiner oder gleich 5 ist, wobei das katalytische System somit dafür verwendbar ist, dass das erhaltene Copolymer ein zahlenmittleres Molekulargewicht Mn von mehr als 30.000 g/mol gemäß Messung nach der in der Erfindung beschriebenen Methode aufweist.

**19.** Verfahren zur Herstellung eines katalytischen Systems nach Anspruch 18, **dadurch gekennzeichnet, dass** das Molverhältnis (Cokatalysator/metallorganischer Komplex) kleiner oder gleich 2 ist, wobei das katalytische System somit dafür verwendbar ist, dass das erhaltene Copolymer ein zahlenmittleres Molekulargewicht Mn von mehr als 60.000 g/mol gemäß Messung nach der in der Erfindung beschriebenen Methode aufweist.

**20.** Verfahren zur Herstellung eines Copolymers aus mindestens einem konjugierten Dien und mindestens einem Monoolefin, bei dem man ein katalytisches System in einem inerten KohlenwasserstoffLösungsmittel in Gegenwart des konjugierten Diens bzw. der konjugierten Diene und des Monoolefins bzw. der Monoolefine umsetzt, **dadurch**

**gekennzeichnet, dass** das katalytische System wie in einem der Ansprüche 1 bis 10 definiert ist.

21. Verfahren zur Herstellung eines Copolymers nach Anspruch 20, **dadurch gekennzeichnet, dass** das Copolymer Einheiten, die sich aus einem konjugierten Dien, wie Butadien oder Isopren, ergeben, und Einheiten, die sich aus mindestens einem Monoolefin aus der aus Ethylen, alpha-Olefinen und vinylaromatischen Verbindungen bestehenden Gruppe ergeben, umfasst.

22. Verfahren zur Herstellung eines Copolymers nach Anspruch 21 **dadurch gekennzeichnet, dass** das Copolymer Einheiten, die sich aus einem alpha-Olefin mit 3 bis 18 Kohlenstoffatomen ergeben, in einem molaren Anteil größer oder gleich 10 % umfasst, wobei der molare Anteil nach der in der Beschreibung beschriebenen Methode gemessen wird.

23. Verfahren zur Herstellung eines Copolymers nach Anspruch 21 **dadurch gekennzeichnet, dass** das Copolymer Einheiten, die sich aus einem konjugierten Dien ergeben, Einheiten, die sich aus Ethylen ergeben, und Einheiten, die sich aus einem alpha-Olefin mit 3 bis 18 Kohlenstoffatomen ergeben, in einem molaren Anteil größer oder gleich 10 % umfasst, wobei der molare Anteil nach der in der Beschreibung beschriebenen Methode gemessen wird.

24. Verfahren zur Herstellung eines Copolymers nach Anspruch 22 oder 23, **dadurch gekennzeichnet, dass** die Einheiten, die sich aus dem konjugierten Dien ergeben, in dem Copolymer in einem molaren Anteil von mehr als 40 % vorliegen, wobei der molare Anteil nach der in der Beschreibung beschriebenen Methode gemessen wird.

25. Verfahren zur Herstellung eines Copolymers nach einem der Ansprüche 20 bis 24, **dadurch gekennzeichnet, dass** die Einheiten, die sich aus dem konjugierten Dien bzw. den konjugierten Dienen ergeben, einen nach der in der Erfindung beschriebenen Methode gemessenen Gehalt an trans-1,4-Verknüpfungen von mehr als 70 % aufweisen.

26. Verfahren zur Herstellung eines Copolymers nach einem der Ansprüche 20 bis 25, **dadurch gekennzeichnet, dass** das Molverhältnis (Cokatalysator/metallorganischer Komplex) kleiner oder gleich 5 ist, damit das zahlenmittlere Molekulargewicht des Copolymers mehr als 30.000 g/mol gemäß Messung nach der in der Erfindung beschriebenen Methode beträgt.

27. Verfahren zur Herstellung eines Copolymers nach einem Anspruch 26, **dadurch gekennzeichnet, dass** das Molverhältnis (Cokatalysator/metallorganischer Komplex) kleiner oder gleich 2 ist, damit das zahlenmittlere Molekulargewicht des Copolymers mehr als 60.000 g/mol gemäß Messung nach der in der Erfindung beschriebenen Methode beträgt.

28. Copolymer aus mindestens einem konjugierten Dien und mindestens einem alpha-Olefin mit 3 bis 18 Kohlenstoffatomen, wobei das Copolymer durch ein Verfahren nach einem der Ansprüche 20 bis 27 erhältlich ist, **dadurch gekennzeichnet, dass** es die folgenden Bedingungen gleichzeitig erfüllt:

- das zahlenmittlere Molekulargewicht des Copolymers beträgt mehr als 60.000 g/mol,
- das Copolymer umfasst Einheiten, die sich aus dem konjugierten Dien bzw. den konjugierten Dienen ergeben, in einem molaren Anteil von mehr als 40 % und kleiner oder gleich 90 % und Einheiten, die sich aus dem alpha-Olefin bzw. den alpha-Olefinen ergeben, in einem Gehalt von weniger als 60 % und größer oder gleich 10 %,
- die Einheiten, die sich aus dem konjugierten Dien bzw. den konjugierten Dienen ergeben, weisen einen Gehalt an trans-1,4-Verknüpfungen von mehr als 70 % auf, und
- das Copolymer ist frei von cyclischen Einheiten,

wobei das zahlenmittlere Molekulargewicht, die molaren Anteile und der Gehalt an trans-1,4-Verknüpfungen gemäß den in der Erfindung beschriebenen Methoden gemessen werden.

29. Copolymer aus mindestens einem konjugierten Dien und mindestens einem alpha-Olefin nach Anspruch 28, **dadurch gekennzeichnet, dass** es die Einheiten, die sich aus dem konjugierten Dien bzw. den konjugierten Dienen ergeben, in einem molaren Anteil von mehr als 60 % und kleiner oder gleich 80 % und die Einheiten, die sich aus dem alpha-Olefin bzw. den alpha-Olefinen ergeben, in einem molaren Anteil von weniger als 40 % und größer oder gleich 20 % umfasst, wobei die molaren Anteile gemäß den in der Erfindung beschriebenen Methoden gemessen werden.

30. Copolymer aus mindestens einem konjugierten Dien und mindestens einem alpha-Olefin nach Anspruch 28 oder

29, **dadurch gekennzeichnet, dass** es aus einem Copolymer aus einem konjugierten Dien, wie Butadien oder Isopren, und einem alpha-Olefin mit 3 bis 18 Kohlenstoffatomen, wie Propen, Buten, Hexen oder Octen, besteht.

**31.** Copolymer aus mindestens einem konjugierten Dien und mindestens einem alpha-Olefin nach Anspruch 28, **dadurch gekennzeichnet, dass** es aus einem Terpolymer aus einem konjugierten Dien, wie Butadien oder Isopren, Ethylen und einem alpha-Olefin mit 3 bis 18 Kohlenstoffatomen, wie Propen, Buten, Hexen oder Octen, besteht.

**32.** Copolymer aus mindestens einem konjugierten Dien und mindestens einem alpha-Olefin nach einem der Ansprüche 28 bis 31, **dadurch gekennzeichnet, dass** jede Einheit, die sich aus dem alpha-Olefin bzw. den alpha-Olefinen ergibt, zwischen zwei Einheiten, die sich aus dem bzw. jedem konjugierten Dien ergeben, in die Kette des Copolymers eingeschoben ist, so dass die Gesamtheit der Einheiten des Copolymers eine regelmäßige Verteilung vom praktisch alternierenden Typ aufweist.

## Claims

**1.** A catalytic system usable for obtaining a copolymer of a conjugated diene and at least one monoolefin such as an alpha-olefin and/or ethylene, **characterised in that** it comprises:

(i) an organometallic complex represented by the following generic formula:

(1) $\{[P(Cp)(Fl)Ln(X)(L_x)\}_p$

where Ln represents a lanthanide atom of an atomic number from 57 to 71, to which is attached a ligand molecule comprising cyclopentadienyl Cp and fluorenyl Fl groups which are each independently substituted or unsubstituted and linked to one another by a bridge P of the formula $MR^1R^2$, where M is an element from column IVa of Mendeleev's periodic table and where $R^1$ and $R^2$, which may be identical or different, each represent alkyl groups having from 1 to 20 carbon atoms or alternatively cycloalkyl or phenyl groups having from 6 to 20 carbon atoms,
where X represents a halogen atom which may be chlorine, fluorine, bromine or iodine,
where L comprises an optional complexing molecule, such as an ether, and optionally a substantially less complexing molecule, such as toluene,
where p is a natural integer greater than or equal to 1 and x is greater than or equal to 0, and

(ii) a co-catalyst belonging to the group consisting of alkylmagnesiums, alkyllithiums, alkylaluminiums, Grignard reagents and mixtures of these constituents.

**2.** A catalytic system according to claim 1, **characterised in that** said organometallic complex is represented by the following formula:

(1a) 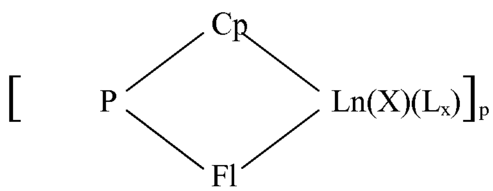

**3.** A catalytic system according to claim 2, **characterised in that** said organometallic complex is such that p is equal to 2, being represented by the following formula:

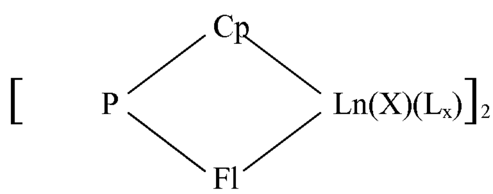

**4.** A catalytic system according to any one of claims 1 to 3, **characterised in that** said cyclopentadienyl Cp and fluorenyl Fl groups are both unsubstituted, respectively satisfying the formulae $C_5H_4$ and $C_{13}H_8$.

**5.** A catalytic system according to any one of claims 1 to 4, **characterised in that** said bridge P satisfies the formula $SiR^1R^2$.

**6.** A catalytic system according to claim 5, **characterised in that** $R^1$ and $R^2$ are each independently alkyl groups, such as methyl groups.

**7.** A catalytic system according to any one of the preceding claims, **characterised in that** said organometallic complex is such that the lanthanide Ln is neodymium.

**8.** A catalytic system according to any one of the preceding claims, **characterised in that** said co-catalyst is an alkylmagnesium such as butyloctylmagnesium, or a mixture of an alkylaluminium such as diisobutylaluminium hydride and an alkyllithium such as butyllithium which are present in said mixture in substantially stoichiometric quantities.

**9.** A catalytic system according to any one of the preceding claims, **characterised in that** said (co-catalyst/organometallic complex) molar ratio is less than or equal to 5, said catalytic system thus being usable such that said resultant copolymer has a number-average molecular mass Mn of greater than 30,000 g/mol as measured according to the method described in the invention.

**10.** A catalytic system according to claim 9, **characterised in that** said (co-catalyst/organometallic complex) molar ratio is less than or equal to 2, said catalytic system thus being usable such that said resultant copolymer has a number-average molecular mass Mn of greater than 60,000 g/mol as measured according to the method described in the invention.

**11.** A process for preparing a catalytic system according to any one of the preceding claims, **characterised in that** it comprises:

a) preparation of said organometallic complex comprising:

(i) reaction with an alkyllithium of a hydrogenated ligand molecule, represented by formula (2) below, in order to obtain a lithium salt satisfying the formula (3) below:

(2) 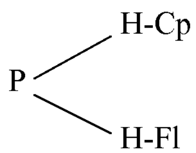 (3) 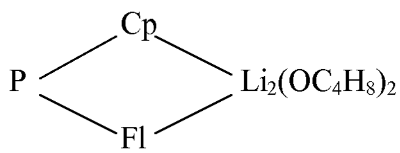

(ii) reaction in a complexing solvent of said salt with an anhydrous trihalide of said lanthanide of the formula $LnX_3$ where X is said halogen,
(iii) evaporation of said complexing solvent, then extraction of the product obtained in (ii) in a solvent which is substantially less complexing than the solvent used in (ii), then, optionally,
(iv) crystallisation of the product extracted in (iii) in order to obtain said organometallic complex from which said complexing solvent is completely absent, then

b) addition of said co-catalyst to said organometallic complex prepared in a).

**12.** A process for preparing a catalytic system according to claim 11, **characterised in that** at least one of the following conditions prevails:

- said alkyllithium used in a) (i) is butyllithium, and/or
- said complexing solvent used in a) (ii) is tetrahydrofuran, and/or
- said substantially less complexing solvent used in a) (iii) is heptane or toluene.

**13.** A process for preparing a catalytic system according to claim 11 or claim 12, **characterised in that** said cyclopentadienyl Cp and fluorenyl Fl groups are both unsubstituted, respectively satisfying the formulae $C_5H_4$ and $C_{13}H_8$.

**14.** A process for preparing a catalytic system according to any one of claims 11 to 13, **characterised in that** said bridge P satisfies the formula $SiR^1R^2$.

**15.** A process for preparing a catalytic system according to claim 14, **characterised in that** $R^1$ and $R^2$ are each independently alkyl groups, such as methyl groups.

**16.** A process for preparing a catalytic system according to any one of claims 11 to 15, **characterised in that** said lanthanide Ln is neodymium.

**17.** A process for preparing a catalytic system according to any one of claims 11 to 16, **characterised in that** said co-catalyst is an alkylmagnesium such as butyloctylmagnesium, or a mixture of an alkylaluminium such as diisobutylaluminium hydride and an alkyllithium such as butyllithium which are present in said mixture in substantially stoichiometric quantities.

**18.** A process for preparing a catalytic system according to any one of claims 11 to 17, **characterised in that** the molar ratio (number of moles of said co-catalyst/number of moles of said organometallic complex) is less than or equal to 5, said catalytic system thus being usable such that said resultant copolymer has a number-average molecular mass Mn of greater than 30,000 g/mol as measured according to the method described in the invention.

**19.** A process for preparing a catalytic system according to claim 18, **characterised in that** said (co-catalyst/organometallic complex) molar ratio is less than or equal to 2, said catalytic system thus being usable such that said resultant copolymer has a number-average molecular mass Mn of greater than 60,000 g/mol as measured according to the method described in the invention.

**20.** A process for preparing a copolymer of at least one conjugated diene and at least one monoolefin, comprising the reaction of a catalytic system in an inert hydrocarbon solvent in the presence of said conjugated diene(s) and of said monoolefin(s), **characterised in that** said catalytic system is as defined in any one of claims 1 to 10.

**21.** A process for preparing a copolymer according to claim 20, **characterised in that** said copolymer comprises units resulting from a conjugated diene, such as butadiene or isoprene, and units resulting from at least one monoolefin belonging to the group consisting of ethylene, alphaolefins and vinyl aromatic compounds.

**22.** A process for preparing a copolymer according to claim 21, **characterised in that** said copolymer comprises units resulting from an alpha-olefin having from 3 to 18 carbon atoms in a molar content of greater than or equal to 10%, the molar content as being measured by the method described in the invention.

**23.** A process for preparing a copolymer according to claim 21, **characterised in that** said copolymer comprises units resulting from said conjugated diene, units resulting from ethylene and, in a molar content of greater than or equal to 10%, units resulting from an alpha-olefin having from 3 to 18 carbon atoms, the molar content as being measured by the method described in the invention.

**24.** A process for preparing a copolymer according to claim 22 or claim 23, **characterised in that** the units resulting from said conjugated diene are present in said copolymer in a molar content of greater than 40%, the molar content as being measured by the method described in the invention.

**25.** A process for preparing a copolymer according to any one of claims 20 to 24, **characterised in that** the units resulting from said conjugated diene(s) have a content of trans-1,4 linkages of greater than 70%, the molar content as being measured by the method described in the invention.

**26.** A process for preparing a copolymer according to any one of claims 20 to 25, **characterised in that** said (co-catalyst/organometallic complex) molar ratio is less than or equal to 5, such that the number-average molecular mass of said copolymer is greater than 30,000 g/mol as measured according to the method described in the invention.

**27.** A process for preparing a copolymer according to claim 26, **characterised in that** said (co-catalyst/organometallic complex) molar ratio is less than or equal to 2, such that said copolymer has a number-average molecular mass of greater than 60,000 g/mol as measured according to the method described in the invention.

**28.** A copolymer of at least one conjugated diene and at least one alpha-olefin having from 3 to 18 carbon atoms, said copolymer being obtainable by a process according to any one of claims 20 to 27, **characterised in that** it simultaneously fulfils the following conditions:

- the number-average molecular mass of said copolymer is greater than 60,000 g/mol,
- said copolymer comprises units resulting from said conjugated diene(s) in a molar content of greater than 40% and less than or equal to 90%, and units resulting from said alpha-olefin(s) in a molar content of less than 60% and greater than or equal to 10%,
- said units resulting from said conjugated diene(s) have a trans-1,4 linkage content of greater than 70%, and
- said copolymer is devoid of cyclic units,

the number-average molecular mass, the molar contents and the trans-1,4 linkage contents being measured according to the methods described in the invention.

**29.** A copolymer of at least one conjugated diene and at least one alpha-olefin according to claim 28, **characterised in that** it comprises the units resulting from said conjugated diene(s) in a molar content of greater than 60% and less than or equal to 80%, and the units resulting from said alpha-olefin(s) in a molar content of less than 40% and greater than or equal to 20%, the molar contents being measured according to the methods described in the invention.

**30.** A copolymer of at least one conjugated diene and at least one alpha-olefin according to claim 28 or claim 29, **characterised in that** it consists of a copolymer of a conjugated diene, such as butadiene or isoprene, and an alpha-olefin having from 3 to 18 carbon atoms, such as propene, butene, hexene or octene.

**31.** A copolymer of at least one conjugated diene and at least one alpha-olefin according to claim 28, **characterised in that** it consists of a terpolymer of a conjugated diene, such as butadiene or isoprene, of ethylene and of an alpha-olefin having from 3 to 18 carbon atoms, such as propene, butene, hexene or octene.

**32.** A copolymer of at least one conjugated diene and at least one alpha-olefin according to any one of claims 28 to 31, **characterised in that** each unit resulting from said alpha-olefin(s) is inserted in the chain of said copolymer between two units resulting from said or each conjugated diene, such that the overall set of the units of said copolymer exhibits a regular distribution of the practically alternating kind.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- DE 2706118 A
- DE 2534496 A
- DE 2001367 A
- EP 171025 A
- WO 8804672 A
- EP 891993 A
- EP 1092731 A


### Littérature non-brevet citée dans la description


- **FURUKAWA, J.** Alternating Copolymers. Plenum Press, 1985, 153-187
- **FURUKAWA, J. et al.** *J. Polym. Sci., Polym. Chem. Ed.,* 1973, vol. 11, 629
- **GALIMBERTI et al.** *Makromol. Chem.,* 1991, vol. 192, 2591
- **KAULBACH. et al.** *Angew. Makromol. Chem.,* 1995, vol. 226, 101
- **VISSEAUX M. et al.** *Macromol. Chem. Phys.,* 2001, vol. 202, 2485
- **ALT et al.** *J. Organomet. Chem.,* 1996, vol. 509, 63-71